# EUROPEAN PATENT APPLICATION

(11) **EP 2 573 438 A1**
(43) Date of publication of application: **27.03.2013**
(21) Application number: 11783214.7
(22) Date of filing: 22.04.2011
(51) Int. Cl.: F16K 31/40, F16K 31/06

(54) **PILOT OPERATED SOLENOID VALVE**

(30) Priority: 18.05.2010 JP 2010114148
(71) Applicant: TGK CO., Ltd., Tokyo 193-0942 (JP)
(72) Inventor: HIROTA, Hisatoshi, Hachioji-shi Tokyo 193-0942 (JP)
(74) Representative: Schröer, Gernot H.
(86) International application number: PCT/JP2011/002392
(87) International publication number: WO 2011/145275

(57) **Abstract**

A pilot-operated electromagnetic valve 500 includes a plunger 571 and a fixed iron core 572 arranged in an axial direction so as to be movable relatively with each other, and also includes a solenoid 502 to generate an electromagnetic force for moving the plunger 571 integrally with a pilot valve 506. The electromagnetic valve 500 further includes a stroke amplifying mechanism including a spring 556 for stopping the pilot valve 506 at a balanced position by exerting an elastic force, on the pilot valve 506, in an opposite direction to the electromagnetic suction force. The spring 556 is largely deformable in comparison with the movement of the plunger 571 caused by the electromagnetic suction force of the solenoid. The mechanism amplifies the stroke of a main valve 505 such that a stop position of the main valve 505 is dependent on the elastic deformation of the spring 556.

## Description

### Technical Field

The present invention relates to a pilot-operated electromagnetic valve and a valve structure suitable for being used in the electromagnetic valve.

### Background Art

For example, Patent Document 1 discloses a pilot-type electromagnetic valve. In this electromagnetic valve, each of an opening of a high-pressure channel and that of a low-pressure-channel is disposed toward one surface of a pressure-operated valve that is displaced in accordance with a difference between the pressures applied to both the surfaces thereof, and a pressure-regulating chamber is formed near to the other surface thereof; a first pilot hole for communicating the high-pressure channel and the pressure-regulating chamber together and a second pilot hole for communicating the low-pressure channel and the pressure-regulating chamber together, are formed in the pressure-operated valve; and an electromagnetically-driven pilot valve element for opening and closing the first pilot hole and second pilot hole by a relative displacement with respect to the pressure-operated valve is provided. The first pilot hole and second pilot hole are opened and closed by a relative displacement between the pressure-operated valve and the electromagnetically-driven pilot valve element. Even if a change in the difference pressure between the high-pressure channel and the low-pressure channel is large, the pressure in the pressure-regulating chamber can be appropriately regulated and the electromagnetic valve can be smoothly opened and closed.

### Patent Document

[Patent Document 1] Japanese Patent Application Publication No. 1996-338557

### Disclosure of the Invention

### Problem to be Solved by the Invention

A typical pilot-operated electromagnetic valve is formed such that amounts of movement of a pilot valve and a main valve become the same as that of an iron core in a solenoid. That is, the pilot valve is directly driven by the solenoid and the main valve follows the drive. An amount of movement of the main valve is restricted by that of the iron core. Accordingly, a large solenoid is needed for increasing a stroke of the main valve.

In general, a proportional valve has a main valve at an opening degree that is arbitrarily regulated, and hence it is desirable that a high level of stability in a stop position of the main valve is provided in the proportional valve. In reality it is, however, not always easy to stop the main valve at a stable position such that the valve has a performance that can be used for practical use, when the proportional valve is a so-called pilot-operated valve. One reason for that is because a load occurring due to the operation of the pilot valve can affect the behaviors of the main valve. Although the positional stability can be improved across a desired stroke of the main valve by making a solenoid for drive to be large in size, such growing in size is incompatible with the trend in which devices are made small in weight and in size.

A purpose of the present invention is to provide a pilot-operated electromagnetic valve suitable for a proportional valve whose drive source is a small solenoid and a valve structure suitable for being used in the electromagnetic valve.

### Means for Solving the Problem

In order to solve the aforementioned problem, an electromagnetic valve according to an embodiment of the present invention is a pilot-operated electromagnetic valve. The electromagnetic valve comprises: a pilot valve including a pilot valve hole formed in one of a body and a main valve of the electromagnetic valve and a pilot valve element arranged to contact and leave the pilot valve hole; a solenoid configured to operate the pilot valve, including a first iron core that moves in an axial direction integrally with the pilot valve element and a second iron core arranged at a gap from the first iron core opposite to the pilot valve element with respect to the axial direction; and an elastic member attached to the pilot valve element at an end of the member and attached to the other of the body and the main valve at another end of the member, so that the pilot valve element is stopped at a balanced position by exerting an elastic force on the pilot valve element in a direction opposite to that of an electromagnetic suction force of the solenoid, wherein by making a deformation range of the elastic member, the deformation occurring due to the elastic force, to be larger than a variable range of the gap between the first iron core and the second iron core, and also by associating an amount of deformation of the elastic member with an amount of movement of the main valve, a stroke of the main valve is larger than a relative movement stroke between the first iron core and the second iron core.

According to this embodiment, because the electromagnetic valve is pilot-operated, the pilot valve is opened and closed when the electromagnetic suction force of the solenoid works, and the main valve is moved due to the pilot operation. The pilot valve element is stopped at a position where the electromagnetic suction force of the solenoid and the elastic force of the elastic member whose one end is attached to the pilot valve element are balanced with each other. The elastic force to be balanced with the electromagnetic suction force is generated by an elastic deformation of the elastic member.

The pilot valve hole is formed in one of the body and the main valve of the electromagnetic valve, and the another end of the elastic member is attached to the other of the body and the main valve of the electromagnetic valve. Thus, when the pilot valve hole is formed in the body, the pilot valve element is connected to the main valve by the elastic member. Alternatively, when the pilot valve hole is formed in the main valve, the pilot valve element is connected to the body by the elastic member. Accordingly, it is not needed to connect a member in which the pilot valve hole is formed directly to the pilot valve element by the elastic member. Although a relative amount of movement between the valve element and the valve hole in the pilot valve is made relatively small, an amount of deformation of the elastic member can be made large without being restricted by the above relative amount of movement.

A deformation range of the elastic member is made larger than a variable range of the gap between the first iron core and the second iron core in the solenoid. An amount of displacement in the solenoid is correlated with an opening degree of the pilot valve, and an amount of deformation of the elastic member is associated with an amount of movement of the main valve. Thus, the stroke of the main valve can be larger than the relative movement stroke between the first iron core and the second iron core. That is, an amount of movement of the main valve can be made large, while an amount of displacement in the solenoid is made relatively small. Accordingly, it becomes possible to adopt a small solenoid as a drive source.

Another embodiment of the present invention is also a pilot-operated electromagnetic valve. This electromagnetic valve comprises: a solenoid including a first iron core and a second iron core arranged in an axial direction so as to be movable relatively with each other, the solenoid configured to generate an electromagnetic suction force for moving the first iron core integrally with a pilot valve; and a stroke amplifying mechanism including an elastic member for stopping the pilot valve at a balanced position by exerting an elastic force on the pilot valve in a direction opposite to that of the electromagnetic suction force, the elastic member being deformable by an amount larger than an amount of reduction in a gap between the first iron core and the second iron core, the reduction occurring due to the electromagnetic suction force of the solenoid, the amplifying mechanism configured to amplify a stroke of a main valve by making a stop position of the main valve to be dependent on an amount of elastic deformation of the elastic member.

According to the embodiment, the elastic member can be deformed by an amount larger than an amount of reduction in the gap between the first iron core and the second iron core, the reduction occurring due to the electromagnetic suction force of the solenoid, and the stroke of the main valve can be amplified by making a stop position of the main valve to be dependent on an amount of elastic deformation of the elastic member. Accordingly, an amount of movement of the main valve can be made large, while an mount of displacement in the solenoid is made relatively small. Accordingly, it becomes possible to adopt a small solenoid as a drive source.

Still another embodiment of the present invention is a valve structure. This valve structure comprises: an intermediate-pressure chamber connecting a high-pressure passage and a low-pressure passage therebetween; a piston configured to move by an effect of a fluid pressure in the intermediate-pressure chamber; a valve element provided to open or close a channel between the intermediate-pressure chamber and one of the high-pressure passage and the low-pressure passage; a solenoid configured to generate an electromagnetic suction force for moving the valve element; and an elastic member configured to exert an elastic force on the valve element in a direction opposite to that of the electromagnetic suction force of the solenoid, an end of the elastic member attached to the piston and another end of the elastic member attached to the valve element, wherein the valve element opens and closes the channel by a balance between the elastic force in accordance with an elastic deformation of the elastic member, the deformation associated with a movement of the piston occurring when the fluid pressure works, and the electromagnetic suction force; and a stop of the piston is provided at a position where the elastic deformation is applied to the elastic member to generate the elastic force to be balanced with the electromagnetic suction force.

According to the embodiment, the valve element regulates the fluid pressure in the intermediate-pressure chamber by a balance between the elastic force of the elastic member whose one end is attached to the piston and another end is attached to the valve element and the electromagnetic suction force of the solenoid. The piston is moved by an effect of the fluid pressure and is stopped at a position where the electromagnetic suction force of the solenoid and the elastic force of the elastic member are balanced with each other. Thus, the piston can be moved to a stop position in accordance with an amount of deformation of the elastic member, when the valve element is operated by the solenoid. An amount of movement of the piston is dependent on an amount of elastic deformation and is not restricted by an amount of movement of the valve element. Accordingly, a movable range of the piston can be made different from that of the valve element. For example, when a movable range of the piston is made larger than that of the valve element, the valve element and the piston according to this valve structure are respectively suitable for a pilot valve element and a main valve element, for example, in a pilot-operated control valve.

### Advantage of the Invention

According to the present invention, a pilot-operated electromagnetic valve suitable for a proportional valve whose drive source is a small solenoid, and a valve structure suitable for being used in the electromagnetic valve, can be provided.

### Brief Description of the Drawings

Fig. 1 is a sectional view illustrating an example of an electromagnetic valve according to First Embodiment of the present invention;
Fig. 2 is a sectional view illustrating the example of the electromagnetic valve according to First Embodiment of the invention;
Fig. 3 is a graph showing the characteristic of the example of the electromagnetic valve according to First Embodiment of the invention;
Fig. 4 is a sectional view illustrating another example of the electromagnetic valve according to First Embodiment of the invention;
Fig. 5 is a sectional view illustrating a further example of the electromagnetic valve according to First Embodiment of the invention;
Fig. 6 is a sectional view illustrating the further example of the electromagnetic valve according to First Embodiment of the invention;
Fig. 7 is a sectional view illustrating the further example of the electromagnetic valve according to First Embodiment of the invention;
Fig. 8 is a sectional view illustrating a still further example of the electromagnetic valve according to First Embodiment of the invention;
Fig. 9 is a sectional view illustrating an example of an electromagnetic valve according to Second Embodiment of the invention;
Fig. 10 is a sectional view illustrating the example of the electromagnetic valve according to Second Embodiment of the invention;
Fig. 11 is a sectional view illustrating the example of the electromagnetic valve according to Second Embodiment of the invention;
Fig. 12 is a sectional view illustrating the example of the electromagnetic valve according to Second Embodiment of the invention;
Fig. 13 is a graph showing the characteristic of the example of the electromagnetic valve according to Second Embodiment of the invention;
Fig. 14 is a sectional view illustrating another example of the electromagnetic valve according to Second Embodiment of the invention;
Fig. 15 is a sectional view illustrating the another example of the electromagnetic valve according to Second Embodiment of the invention;
Fig. 16 is a sectional view illustrating the another example of the electromagnetic valve according to Second Embodiment of the invention;
Fig. 17 is a system structure view illustrating a schematic structure of an automotive air-conditioner according to Third Embodiment of the invention;
Figs. 18(A) to 18(C) are explanatory views illustrating operations of the automotive air-conditioner according to Third Embodiment of the invention;
Fig. 19 is a sectional view illustrating an example of an electromagnetic valve according to Third Embodiment of the invention;
Fig. 20 is a system structure view illustrating a schematic structure of an automotive air-conditioner according to Fourth Embodiment of the invention;
Figs. 21(A) to 21(C) are explanatory views illustrating operations of the automotive air-conditioner according to Fourth Embodiment of the invention; and
Fig. 22 is a sectional view illustrating an example of an electromagnetic valve according to Fourth Embodiment of the invention.

### Best Mode for Carrying out the Invention

A pilot-operated electromagnetic valve according to an embodiment of the present invention is formed so as to associate a change in the suction force of a solenoid with an amount of displacement of a main valve. Accordingly, an elastic member for generating an elastic force to be balanced with the solenoidal force is provided, and an amount of movement of the main valve is determined to be dependent on an amount of elastic deformation due to the elastic force. Because a stroke of the main valve is associated with a variable range of the suction force, instead of a movable range of a plunger, an amount of movement of the plunger no longer restricts the amount of movement of the main valve. Even if the plunger is substantially stationary without being displaced over a control current range, a desired stroke of the main valve can be achieved in accordance with a change in the suction force. Because the movable range of the plunger can be made small, a pilot-operated electromagnetic valve having a small solenoid as a drive source can be provided.

On the other hand, a typical pilot-operated electromagnetic valve is simply formed such that a main valve is moved only by an amount of movement of an iron core in a solenoid. Although even such a typical valve has a built-in spring, it is provided only to bias a valve element to the initial state, and accordingly an operation of amplifying an amount of movement of the main valve cannot be provided, different from in an embodiment of the invention.

Hereinafter, preferred embodiments of the present invention will be described in detail with reference to the accompanying drawings. In the following description, for convenience, a positional relationship in each structure may be expressed based on the illustrated state. Also, a positional relationship in each structure may be described by using the illustrated vertical and horizontal positional relationships. Each illustrated electromagnetic valve is generally formed to be centered on an axis along the suction drive direction of a solenoid. The axis may be appropriately referred to as a center axis. The electromagnetic valve, in particular, the inside thereof is formed such that each member is generally arranged along the center axis.

### [First Embodiment]

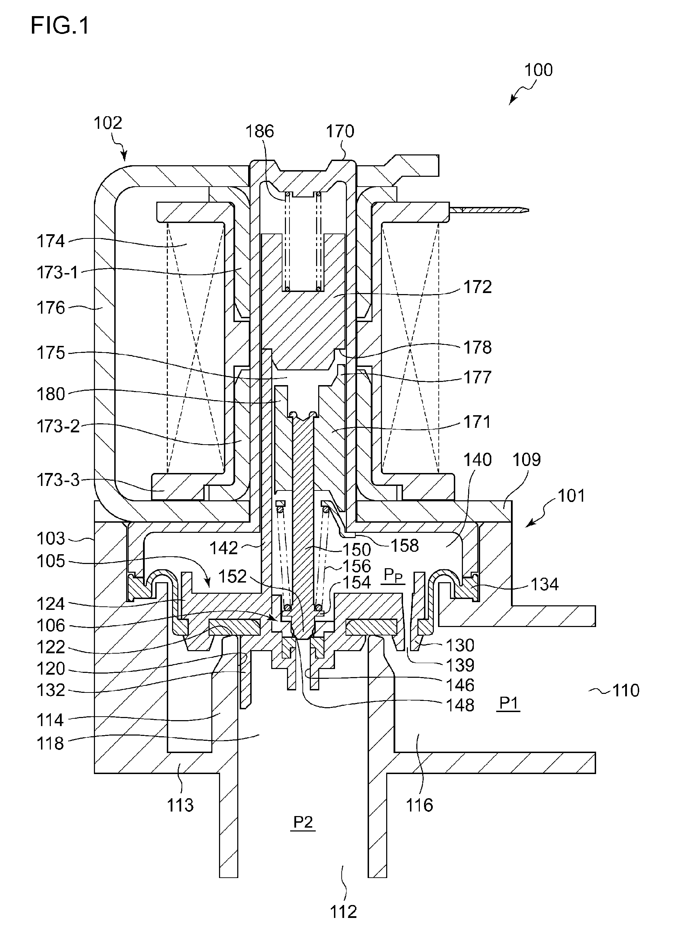

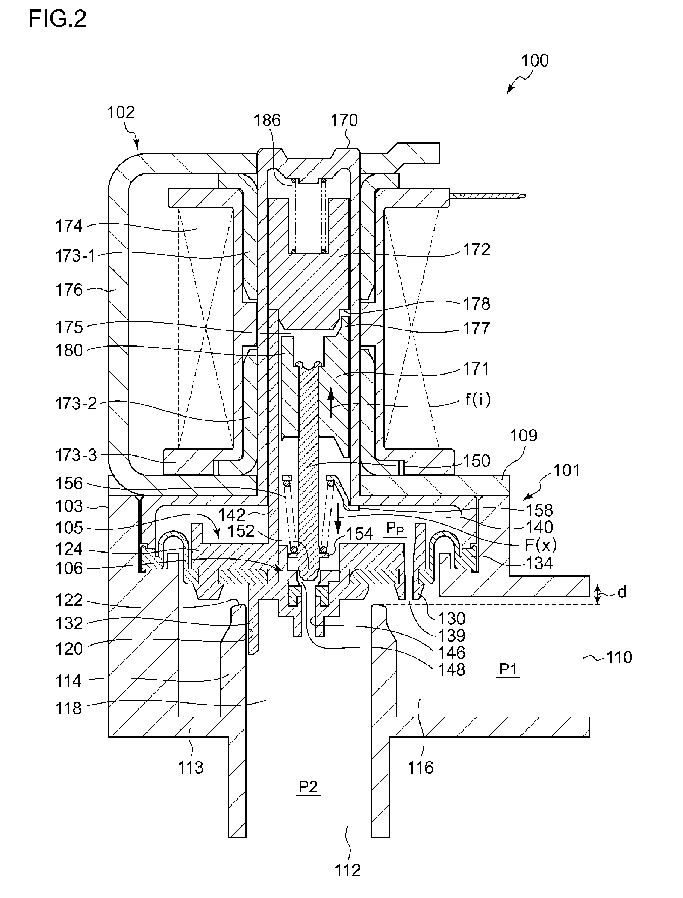

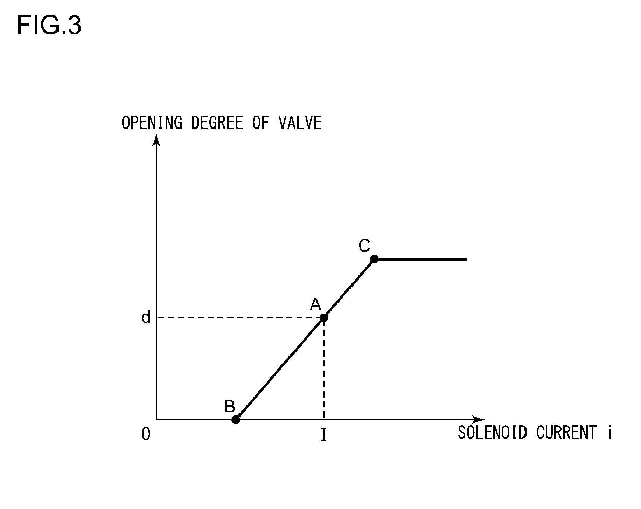

Fig. 1 and Fig. 2 are sectional views each illustrating a specific structure of a pilot-operated electromagnetic valve 100 according to First Embodiment of the present invention. The electromagnetic valve 100 is formed by assembling a valve unit 101 and a solenoid 102. In one example, the electromagnetic valve 100 is formed as a proportional valve whose opening degree can be an arbitrary value in accordance with a current supplied to the solenoid 102. Fig. 1 illustrates a state of the electromagnetic valve 100 occurring when a current is not supplied to the solenoid 102, while Fig. 2 illustrates the electromagnetic valve 100 occurring when an opening degree thereof is regulated to a desired one by supplying a current to the solenoid 102. As illustrated in Fig. 1, the electromagnetic valve 100 is formed as a normally-closed valve. Fig. 3 is a graph showing the relationship between the control current and the opening degree of the electromagnetic valve 100.

The valve unit 101 is formed to house a main valve 105 and a pilot valve 106 in a bottomed cylindrical body 103, these valves arranged coaxially with the center axis. The solenoid 102 is attached to the upper surface 109 of the body; an inlet port 110 is provided in a side part of the body 103; and an outlet port 112 is provided on the lower surface 113 of the body. In one example, the electromagnetic valve 100 is used as a control valve for controlling the flow of a liquid (e.g., water).

A cylindrical partition wall 114 extending, coaxially with the center axis, upward from the lower surface 113 of the body is provided in the body 103. The partition wall 114 partitions the inside of the body 103 into a high-pressure chamber 116 and a low-pressure chamber 118. The high-pressure chamber 116 communicates with the inlet port 110 and the low-pressure chamber 118 to the outlet port 112.

A main valve hole 120 is formed by the cylindrical inner circumferential surface of the partition wall 114, and a main valve seat 122 is formed by the upstream opening end of the partition wall 114 . A disk-shaped main valve element 124 is arranged in the high-pressure chamber 116. The main valve element 124 opens or closes the main valve 105 by being detached from or attached to the main valve seat 122. In the main valve element 124, a plurality of legs 132 protruding downward from the radially middle part of the lower surface of the disk are extended (in the view, one of the legs is illustrated). The plurality of legs 132 are slidably supported by the main valve hole 120. The main valve 105 is opened or closed with the surface of a diaphragm 134 leaving or contacting the main valve seat 122 at the radial middle between a projection 130 on the outer circumference of the main valve element 124 and the legs 132.

The diaphragm 134 is interposed between the main valve element 124 and the inner surface of the body 103. The diaphragm 134 is attached to the main valve element 124 by the projection 130 formed on the outer circumference of the main valve element 124. The main valve element 124 including the diaphragm 134 partitions the high-pressure chamber 116, a back-pressure chamber 140, and the low-pressure chamber 118. It is allowed that the main valve element 124 is slidably moved in the axial direction by deformation of the diaphragm 134 while the high-pressure chamber 116 and the back-pressure chamber 140 are divided. An orifice 139 as a leak passage is provided which penetrates the projection 130 on the outer circumference. The orifice 139 communicates the high-pressure chamber 116 and the back-pressure chamber 140.

The pressure P1 in the high-pressure chamber 116 (referred to as "upstream pressure P1") becomes intermediate pressure Pp in the back-pressure chamber 140 after passing through the orifice 139, which further becomes the pressure P2 (referred to as "downstream pressure P2") by being reduced when passing through the main valve 105. The intermediate pressure Pp is changed by an opened and closed state of the pilot valve 106. A passage connecting the high-pressure chamber 116 and the low-pressure chamber 118 via the main valve 105 forms a "main passage" in the electromagnetic valve 100, while a passage connecting the high-pressure chamber 116 and the low-pressure chamber 118 via the back-pressure chamber 140 and the pilot valve 106 forms a "sub-passage" in the electromagnetic valve 100.

A through-hole is formed, coaxially with the center axis, at the center of the main valve element 124, and a sub-valve hole 146 is formed by the inner circumferential surface of the through-hole. In the illustrated example, this through-hole has three steps in which the diameter of the upper step is increased and that of the lower step is reduced. On the upper surface of the main valve element 124, a plurality of legs 142 are extended upward from the periphery of the sub-valve hole 146 at the upstream side (in the view, only one of the legs is illustrated). The plurality of legs 142 are extended to the inside of the solenoid 102 to be connected to a second plunger 172 in the solenoid 102.

A sub-valve seat 148 is formed in one of the steps of the sub-valve hole 146. In the illustrated example, the sub-valve seat 148 is formed on a downstream portion of the sub-valve hole 146 at its upstream open end, which is the first step of the sub-valve hole 146 having the smallest diameter. A pilot valve element 150 that forms the pilot valve 106 opens or closes the sub-valve hole 146 by being detached from or attached to the sub-valve seat 148 in accordance with a control state, as described later. The pilot valve element 150 has an elongated body that is formed of, for example, a stainless material, and extends along the center axis. The upper half of the sub-valve hole 146 is designed to have a dimension through which the lower end of the pilot valve element 150 can be inserted. Specifically, for example, the diameter of the second step of the sub-valve hole 146 is approximately the same as that of the pilot valve 150, and the diameter of the third step thereof, which is the largest one in the sub-valve hole 146, is larger than that of the pilot valve element 150.

In the closed state of the pilot valve 106 as illustrated in Fig. 1, the tip 152 of the pilot valve element 150 is housed in the second step of the sub-valve hole 146 such that the tip 152 is brought into contact with the sub-valve seat 148. A spring mounting flange 154 extending from the pilot valve element 150 in the radial direction is provided slightly upward from the tip 152. The spring mounting flange 154 is formed at a position where it is housed in the third step of the sub-valve hole 146 in the illustrated closed state. Alternatively, the outer surface of the spring mounting flange 154 may be slidably supported on the inner surface of the third step of the sub-valve hole 146.

The sub-valve hole 146 has a channel sectional area that is larger than that of the orifice 139. Thus, a flow rate in the sub-valve hole 146 is larger than that in the orifice 139. The intermediate pressure Pp in the back-pressure chamber 140, occurring when the pilot valve 106 is closed, is increased to the upstream pressure P1 by an inflow through the orifice 139. On the other hand, when the pilot valve 106 is opened, the intermediate pressure Pp is reduced by an outflow through the sub-valve hole 146.

A spring 156 as the elastic member in the present example is interposed between the spring mounting flange 154 and a spring mounting member 158. The spring 156 biases the pilot valve element 150 to the valve-closing direction. The lower end of the spring 156 is attached to the upper surface of the spring mounting flange 154, and the upper end thereof is attached to the lower surface of the spring mounting member 158, and the pilot valve element 150 is inserted through the inside of the spring 156. Thus, the spring 156 is housed in the back-pressure chamber 140 with one end of the spring 156 being attached to the pilot valve element 150 and the other end being attached to the body 103.

The spring mounting member 158 is a tubular member having a truncated cone shape; and an insertion hole for the pilot valve element 150 is formed at the center, and the periphery of the spring mounting member having an increased diameter is attached to the lower end opening of a sleeve 170. The spring mounting member 158 is arranged coaxially with the center axis. On the lower surface of a first plunger 171 is formed a concave portion having a shape corresponding to the truncated cone shape of the spring mounting member 158. The pilot valve element 150 extends downward from the concave portion to pass through the spring mounting member 158.

The solenoid 102 has the bottomed cylindrical sleeve 170 attached so as to seal the upper end opening of the body 103. In the sleeve 170, the first plunger 171 as a first iron core and a second plunger 172 as a second iron core are housed in such a manner that the two are disposed so as to face each other in the axial direction. As described later, the first plunger 171 can be moved in the axial direction integrally with the pilot valve element 150 and the second plunger 172 can be moved in the axial direction integrally with the main valve element 124, thereby allowing the first plunger 171 and the second plunger 172 to be moved relatively with each other in the axial direction. The second plunger 172 is disposed opposite to the pilot valve element 150 in respect of the axial direction so as to create a space 175 with the first plunger 171.

An upper magnetic sleeve 173-1 and a lower magnetic sleeve 173-2 are provided, along the axial direction, on the outer circumference of the sleeve 170, and further, a bobbin 173-3 is provided radially outside the sleeve 170. A magnet coil 174 is wound around the bobbin 173. The upper magnetic sleeve 173-1 and the lower magnetic sleeve 173-2 are separated from each other in the axial direction. A case 176 is provided so as to cover the magnet coil 174 from the outside. The sleeve 170 penetrates the case 176 in the axial direction. A terminal for application of electric power is provided with the magnet coil 174. In a magnetic circuit in the solenoid 102, magnetic field lines pass through each of the case 176, lower magnetic sleeve 173-2, first plunger 171, second plunger 172, upper magnetic sleeve 173-1, and case 176 in this order. The space 175 between the first plunger 171 and the second plunger 172 acts as a magnetic gap.

The first plunger 171 has a cylindrical shape and a plurality of slits 180 extending in the axial direction (in the view, one of the slits is illustrated) are provided on the outer circumference of the first plunger 171. The aforementioned leg 142 of the main valve element 124 protrudes upward by passing through the first plunger 171 via the slit 180. The pilot valve element 150 is fixed to the first plunger 171 with penetrating the first plunger 171 along its axis line and with the upper end of the pilot valve element 150 being caulked. Accordingly, the pilot valve element 150 moves integrally with the first plunger 171.

The second plunger 172 has a cylindrical shape and supports the legs 142 with the lower end surface of the second plunger 172 being brought into contact with the upper end surface of the legs 142. A spring 186 for biasing the main valve element 124 to the valve-closing direction via the second plunger 172 is interposed between the second plunger 172 and the sleeve 170. One end of the spring 186 is attached to the upper end of the sleeve 170, and the other end is attached to a concave portion formed on the upper portion of the second plunger 172. Thus, the main valve element 124 can be moved integrally with the second plunger 172.

When the electromagnetic valve 100 is made to function as a proportional valve, a current to be supplied to the solenoid 102 is controlled within a control range determined by both a minimum current, by which a desired minimum opening degree is achieved (e.g., non-application of power by which a fully-closed state is achieved), and a maximum current, by which a desired maximum opening degree is achieved (e.g., a predetermined current by which a fully-opened state is achieved). The mechanical characteristic of the spring 156 is set such that a range of an amount of elastic deformation of the spring 156 is larger than that of a variable amount in the control range in respect of the gap between the first plunger 171 and the second plunger 172. The range of elastic deformation corresponding to the control range of current can be made large by, for example, making the spring constant of the spring 156 to be relatively small.

The electromagnetic valve 100 formed as stated above can be made to function as a pilot-operated normally-closed electromagnetic proportional valve by which a flow from the upstream side to the downstream side can be controlled at an arbitrary opening degree in accordance with a current supplied to the solenoid 102. Hereinafter, the movements will be described in detail with reference to Fig. 1 to 3. As stated above, Fig. 1 illustrates a state where the solenoid 102 is turned off and the electromagnetic valve 100 is closed. Fig. 2 illustrates a state at Point A in the characteristic of a proportional valve illustrated in Fig. 3. At Point A, a control current "I" is supplied to the solenoid 102 to give an opening degree "d" of the main valve 105.

In a state where the solenoid 102 is turned off (state of non-application of power) (see Fig. 1), the solenoidal force does not work, and hence the main valve element 124 is biased by the spring 186 to the valve-closing direction via the second plunger 172 such that the main valve 105 is closed. In addition, the pilot valve element 150 is biased to the valve-closing direction by the spring 156 such that the pilot valve 106 is also closed. A fluid is introduced into the back-pressure chamber 140 from the upstream side via the orifice 139 such that the intermediate pressure Pp becomes equal to the upstream pressure P1. Because the main valve 105 is closed, a flow from the inlet port 110 on the upstream side to the outlet port 112 on the downstream side is blocked.

A suction force f(i) in response to a current i works between the first plunger 171 and the second plunger 172 by starting the application of power to the solenoid 102 (see Fig. 2). The pilot valve element 150 is driven, integrally with the first plunger 171, upward in the axial direction such that the pilot valve 106 is opened. With the upward movement of the pilot valve element 150, an amount "x" of elastic deformation of the spring 156 is increased. In the illustrated example, the spring 156 is compressed. The spring 156 exerts an elastic force F(x) in response to the amount of deformation thereof, on the pilot valve element 150 in the direction opposite to the suction force f(i).

The pressure in the back-pressure chamber 140 is reduced by the opening of the pilot valve element 150. Upon a differential pressure working at this moment, the main valve element 124 moves upward so as to follow the pilot valve element 150. The main valve element 124 moves integrally with the second plunger 172 via the legs 142. Thus, the second plunger 172 retreats upward with the opening movement of the main valve element 124. Thereby, the amount of movement of the main valve element 124 is allowed to be equal to the amount of elastic deformation of the spring 156.

Thus, the pilot valve element 150 moves in accordance with a balance between the solenoidal force f(i) determined by the control current and the spring force F(x), and stops at a position where the forces are balanced with each other. The main valve element 124 follows the pilot valve element 150 and then stops at the opening degree d corresponding to the balanced stop position of the pilot valve element 150 in the state where the control current I is supplied to the solenoid 102 (controlled state). When the control current is reduced, the main valve element 124 and the pilot valve element 150 move in the direction opposite to the direction of the aforementioned movements, so that they are returned to the closed state as illustrated in Fig. 1.

In the state of the opening degree d as illustrated in Fig. 2, if the main valve element 124 were displaced in the valve-closing direction (downward in Fig. 2) by an additional opening degree Δd, it would mean that the pilot valve 106 is moved relatively in the valve-opening direction. In that case, the pressure Pp in the back-pressure chamber 140 approaches the downstream pressure P2, and hence the main valve element 124 is returned to the valve-opening direction (upward in Fig. 2) by an effect of the differential pressure. Conversely, when the main valve element 124 is displaced by an opening degree Δd in the valve-opening direction (upward in Fig. 2), the deformation of the spring 156 and thus the spring force are both increased. Accordingly, the main valve element 124 is eventually returned to the valve-closing direction (downward in Fig. 2), because the increase in the spring force acts as a restoring force. As a result, the opening degree of the main valve 105 will be maintained at a degree in accordance with the control current.

As illustrated in Fig. 3, the fully-closed state of the electromagnetic valve 100 illustrated in Fig. 1 is maintained before the control current reaches Point B, and the valve opening degree is increased proportionally with an increase in the control current when the current is within a range of Point B to Point C. Point C represents a fully-opened state of the electromagnetic valve 100. Accordingly, if a current is made larger than that at Point C, the opening degree does not become large. The closed-state is maintained in the region that a current is smaller than that at Point B because the corresponding solenoid suction force is smaller than that at Point B and cannot exceed the biasing force by which the pilot valve 106 is closed.

The electromagnetic valve 100 has, so to speak, a built-in stroke amplification mechanism for amplifying the stroke of the main valve 105. This stroke amplification mechanism includes the spring 156 for stopping the pilot valve element 150 at a balanced position by exerting the spring force in the direction opposite to that of the solenoidal force. In the control current range, the amount of deformation of the spring 156 can be larger than the amount of reduction in the magnetic gap due to the solenoidal force. By moving the second plunger 172 upward or downward integrally with the main valve element 124 during the opening or closing movement thereof, the amount of deformation of the spring 156 is associated with the amount of movement of the main valve while the amount of change in the magnetic gap is being suppressed. A change of the solenoid control current is converted into an amount of elastic deformation via the suction force and elastic force. Thus, a desired stroke of the main valve can be achieved by, so to speak, amplifying a minute amount of change in the magnetic gap in a small solenoid. Accordingly, a pilot-operated electromagnetic valve excellent in practicality can be formed by using a small solenoid as a drive source.

As illustrated in Figs. 1 and 2, a first step 177 whose outer circumference is convexed is formed on the upper surface of the first plunger 171 in the solenoid 102, and a second step 178 having a shape corresponding to the first step 177 is formed on the lower surface of the second plunger 172 facing the first plunger 171. The second step 178 is formed on the lower surface of the second plunger 172 by a convex portion corresponding to the concave portion of the first step 177 at the center of the upper surface of the first plunger 171.

By using this step structure, the suction force characteristic of the solenoid 102 can be made flatter across a wide range of the magnetic gap, in comparison with the case where the end surface of each plunger is made flat. That is, the suction force can be maintained so as to be substantially constant in the range, even if the magnetic gap is changed. As a solenoid is smaller, a magnetic gap range where suction force is constant generally becomes narrower. There is the fear that an opening degree of the pilot valve element 150 may be unstable due to an excessive variation of the suction force under a minute displacement of the pilot valve element 150 caused by a disturbance or the like, which is not preferable, in particular, in a proportional valve. Accordingly, application of the step structure is preferable from the viewpoint of contributing to the miniaturization of a solenoid in an proportional valve. Making a variation of the suction force to be small is also preferable from the viewpoint of forming an effective restoring force forming mechanism by the elastic force. If the suction force is not changed when the pilot valve element 150 is displaced from the stationary state where the forces are balanced with each other, the elastic force that has changed can be exerted as the restoring force as it is.

According to the present example, however, the electromagnetic valve 100 is formed in such a way that: the pilot valve element 150 and the first plunger 171 are driven integrally with each other; and when the main valve element 124 follows the pilot valve element 150, the second plunger 172 is moved integrally with the main valve element 124. Thus, an amount of change in the magnetic gap during the operation of the electromagnetic valve 100 is small. Therefore, it is not essential that the suction force characteristic of the solenoid 102 is made flat by using the aforementioned step structure.

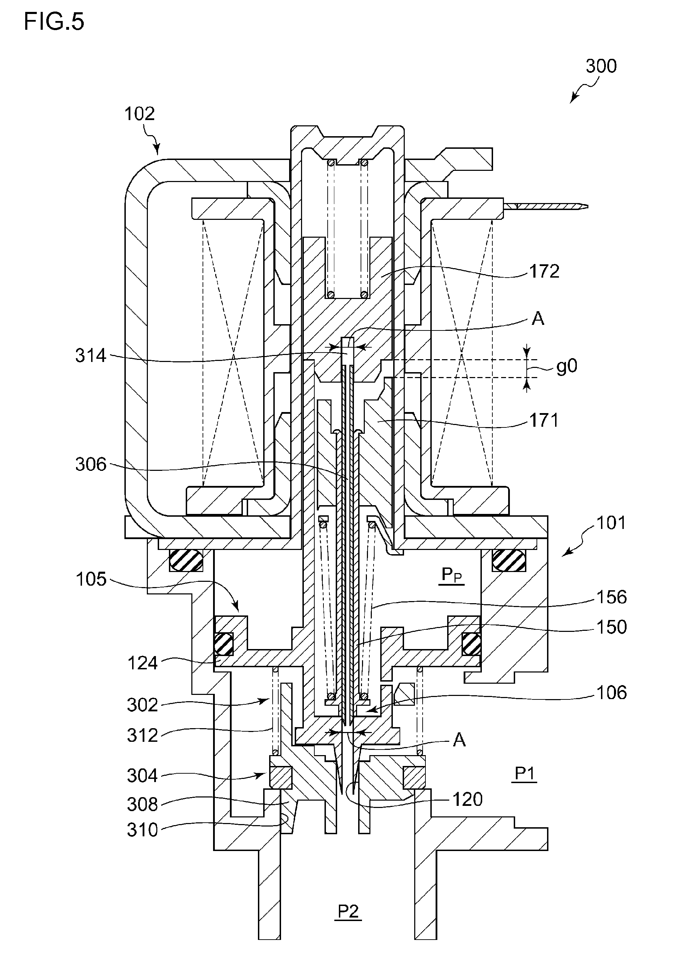

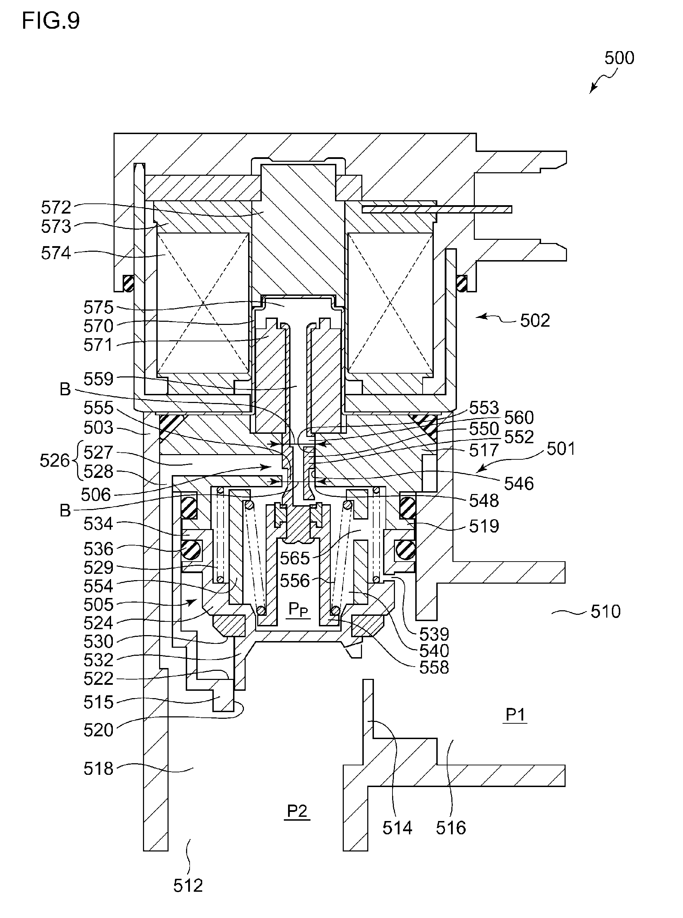

In the illustrated example, the intermediate pressure Pp in the back-pressure chamber 140 is also introduced into the inside of the sleeve 170 in the solenoid 102. Accordingly, the differential pressure between the intermediate pressure Pp and the downstream pressure P2 can work on the pilot valve element 150. When the differential pressure between the upstream pressure P1 and the downstream pressure P2 is not so large and the differential pressure working on the pilot valve element 150 is not large, an influence by the differential pressure affecting the balance of the forces in the pilot valve element 150 does not become a problem in practical use. However, when it is considered to be important that the influence by the differential pressure is reduced or prevented, a structure may be adopted, in which so-called back pressure cancellation for offsetting fluid force in the axial direction working on the pilot valve element 150 can be made possible (see, e.g., Figs. 5 and 9).

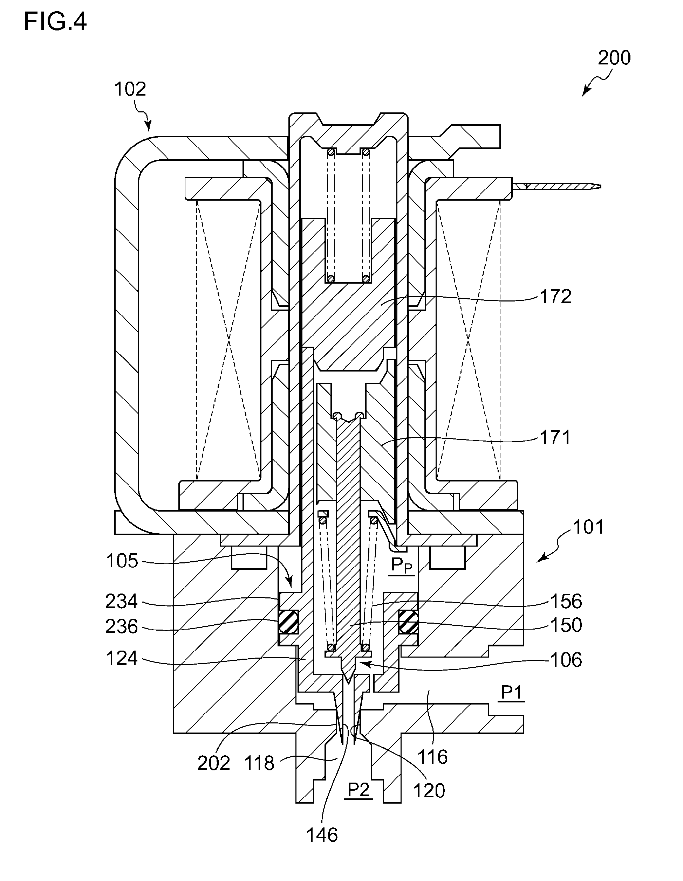

A variation of the electromagnetic valve 100 according to First Embodiment will be described with reference to Figs. 4 to 8. In Figs. 4 to 8, parts similar to those illustrated in Fig. 1 will be denoted with the same reference numerals and description will be appropriately omitted for avoiding redundancy.

Fig. 4 is a sectional view illustrating an electromagnetic valve 200 that is another example in which the pilot mechanism in the electromagnetic valve 100 according to First Embodiment is adopted. Fig. 4 illustrates the electromagnetic valve 200 in a state of non-application of power. In one example, the electromagnetic valve 200 is preferable as an expansion valve to be used in a refrigeration cycle of an automobile air-conditioner (see later-described Third Embodiment).

The electromagnetic valve 200 is formed as a needle valve. An inlet portion 202 in the low-pressure chamber 118, the inlet portion connecting the low-pressure chamber 118 and the high-pressure chamber 116, is made narrow, and the main valve hole 120 is formed by the cylindrical inner circumferential surface of the inlet portion 202, and the main valve seat 122 is formed by the upstream opening end thereof. The center of the main valve element 124 that forms the sub-valve hole 146 is formed as a needle portion having a conical shape.

In the electromagnetic valve 200 illustrated in Fig. 4, a flange portion 234 extending radially outward is provided with the main valve element 124 at its center in the axial direction and is slidably supported on the inner circumferential surface of the body 103, instead of the diaphragm 134 in the main valve element 124 (see Fig. 1). An O-ring 236 for sealing is fitted onto the outer circumferential surface of the flange portion 234. The flange portion 234 partitions the high-pressure chamber 116 and the back-pressure chamber 140. A plurality of the legs 142 are extended upward from the flange portion 234 to the inside of the solenoid 102 (in the view, one of the legs is illustrated).

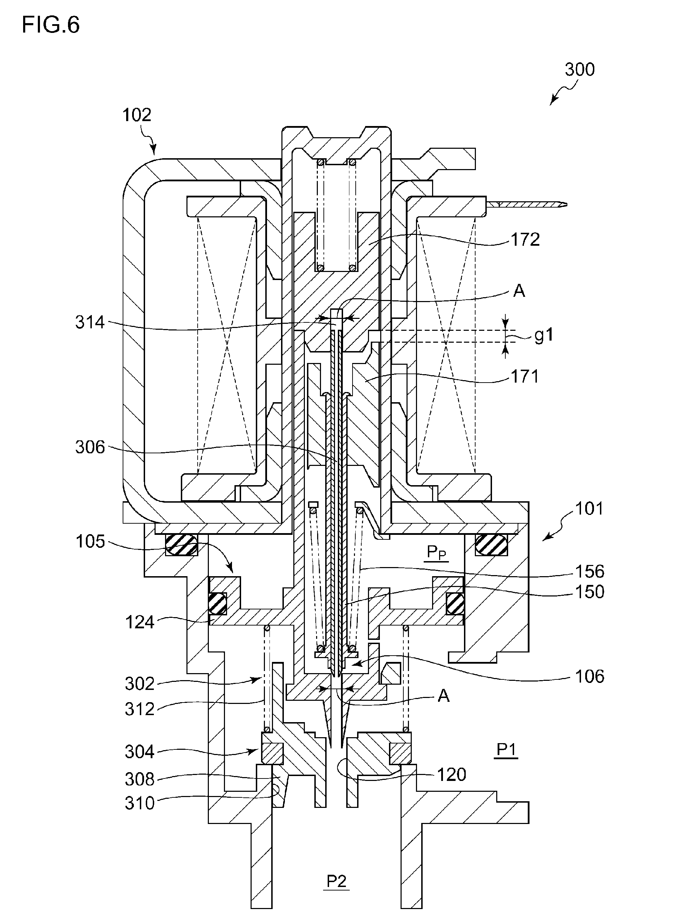

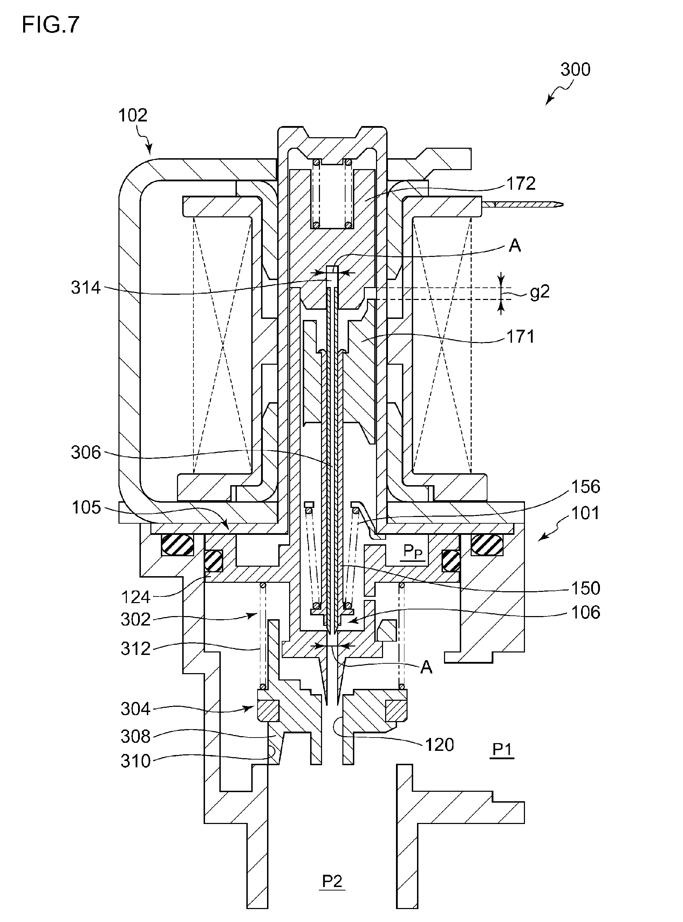

Figs. 5 to 7 are sectional views each illustrating an electromagnetic valve 300 that is still another example in which the pilot mechanism in the electromagnetic valve 100 according to First Embodiment is adopted. In the electromagnetic valve 300, both a needle valve 302 including the aforementioned pilot mechanism and a large flow rate valve 304 by which a larger rate of flow than the needle valve 302 is made possible are arranged in series in the axial direction. The needle valve 302 and the large flow rate valve 304 are disposed in this order from the upstream side. Fig. 5 illustrates the electromagnetic valve 300 in a state of non-application of power. Fig. 6 illustrates a first state where an opening degree of the needle valve 302 is controlled by a pilot operation. In this first state, the large flow rate valve 304 is maintained at the closed state in the same way as in the state of non-application of power. Fig. 7 illustrates a second state where an opening degree of the large flow rate valve 304 is controlled as well as the needle valve 302. A solenoid control current in the second state is larger than that in the first state. That is, with an increase in the solenoid control current from the state of non-application of power, a transition in the control states of the electromagnetic valve 300 is made in the order of the first state and the second state.

The needle valve 302 has the same structure as that of the electromagnetic valve 200 illustrated in Fig. 4. However, for the aforementioned back pressure cancellation, a through-hole 306 is formed, in the axial direction, at the center of the pilot valve element 150. As illustrated in Fig. 5, the effective diameter A of the valve hole of the pilot valve 106 is made equal to the effective diameter A of a small chamber 314 in the second plunger 172, and hence the back pressure cancellation in the pilot valve element 150 can be achieved. The upper end of the pilot valve element 150 is inserted into the small chamber 314 in the second plunger 172, thereby allowing the upper end thereof to be slidably supported in the axial direction.

The main valve hole 120 that the needle portion of the main valve element 124 in the needle valve 302 contacts or leaves is formed into a cylindrical surface shape along the center axis of a valve element 308 in the large flow rate valve 304. A valve hole 310 of the large flow rate valve 304 is formed by the cylindrical inner circumferential surface of the low-pressure chamber 118. A spring 312 for biasing the large flow rate valve 304 to the valve-closing direction is interposed between the valve element 308 in the large flow rate valve 304 and the main valve element 124 in the needle valve 302.

As known from Figs. 5 to 7, a magnetic gap g1 (see Fig. 6) and a magnetic gap g2 (see Fig. 7) in the control states are smaller, in comparison with a magnetic gap g0 in the state of non-application of power (see Fig. 5). The magnetic gap g1 (see Fig. 6) and the magnetic gap g2 (see Fig. 7) in the control states are substantially equal to each other. As stated above, a control current larger than that in the first state in Fig. 6 is provided in the second state in Fig. 7, but the magnetic gap is maintained to be approximately constant. The magnetic gap is reduced when a current is increased from the state of non-application of power to the minimum of the control range in which the opening degree is proportionally changed, but the magnetic gap is maintained to be substantially constant in the proportional control range.

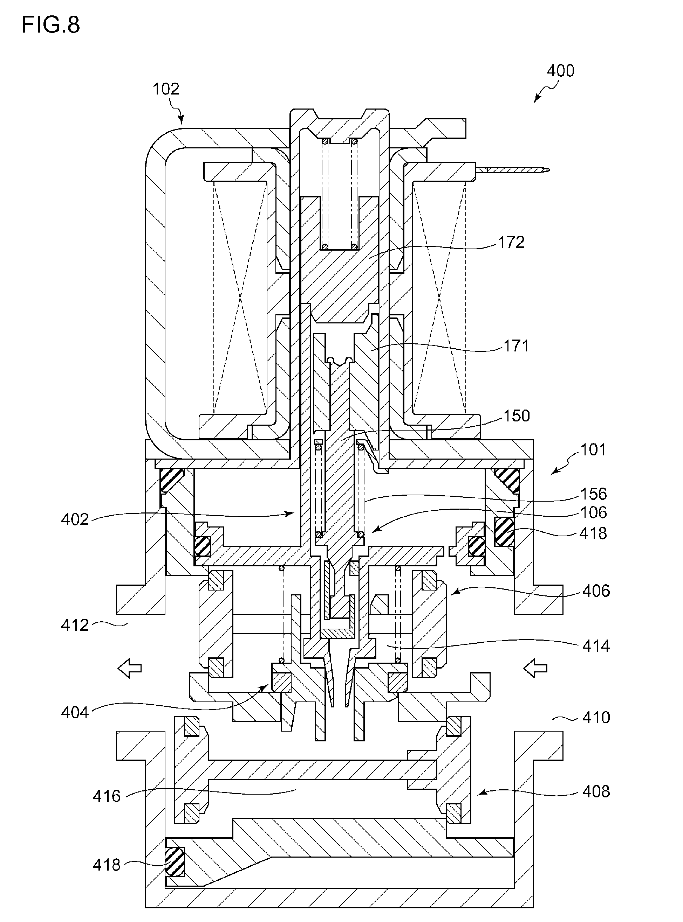

Fig. 8 is a sectional view illustrating an electromagnetic valve 400 that is still another example in which the pilot mechanism in the electromagnetic valve 100 according to First Embodiment is adopted. Fig. 8 illustrates the electromagnetic valve 400 in a state of non-application of power. The electromagnetic valve 400 comprises both a needle valve 402 including the pilot mechanism and a large flow rate valve 404 in series, in the same way as in the electromagnetic valve 300 illustrated in Fig. 5. The electromagnetic valve 400 is formed as a two-way valve that allows an inversion of the flow direction, while the electromagnetic valve 300 functions under one-way flow from the upstream side to the downstream side. Accordingly, the electromagnetic valve 400 comprises a first check valve 406 and a second check valve 408 as a flow direction switching mechanism.

The electromagnetic valve 400 comprises a first port 410 on the right side in Fig. 8 and a second port 412 on the left side. With the flow direction switching mechanism, the first port 410 communicates with one of a first pressure chamber 414 and a second pressure chamber 416, while the second port 416 communicates with the other of the two. The first check valve 406 is housed in the first pressure chamber 414, while the second check valve 408 is housed in the second pressure chamber 416. As illustrated, an O-ring 418 for sealing the pressure chambers is attached obliquely in a cross-coupled manner.

Fig. 8 illustrates the case where a flow from the right to the left is allowed. That is, in this case, the electromagnetic valve 400 disposes the first port 410 on the upstream side and the second port 412 on the downstream side. The first port 410 communicates with the first pressure chamber 414, while the second port 412 communicates with the second pressure chamber 416. The fluid that has flowed in from the first port 410 passes through the first check valve 406, and then passes through the second check valve 408 via the needle valve 402 or the large flow rate valve 404, followed by the flowing out from the second port 412.

On the other hand, when an opposite flow has flowed in the electromagnetic valve 400, the switching mechanism is automatically switched by an operation of the flow, so that the opposite flow is allowed. In Fig. 8, when the fluid flows in from the second port 412, the first check valve 406 and the second check valve 408 are both moved to the right side upon receiving the flow. Thereby, the second port 412 communicates with the first pressure chamber 414, while the first port 410 communicates with the second pressure chamber 416. Thus, the fluid that has flowed in from the second port 412 passes through the first check valve 406, and then passes through the second check valve 408 via the needle valve 402 or the large flow rate valve 404, followed by the flowing out from the first port 410.

### [Second Embodiment]

Second Embodiment of the present invention will now be described. Figs. 9 to 12 are sectional views illustrating a specific structure of a pilot-operated electromagnetic valve 500 according to Second Embodiment of the invention. As illustrated in Fig. 9, the electromagnetic valve 500 according to Second Embodiment is formed as a normally-open valve, different from First Embodiment. In the following description, parts similar to those in First Embodiment will be denoted with the same reference numerals and description will be appropriately omitted for avoiding redundancy.

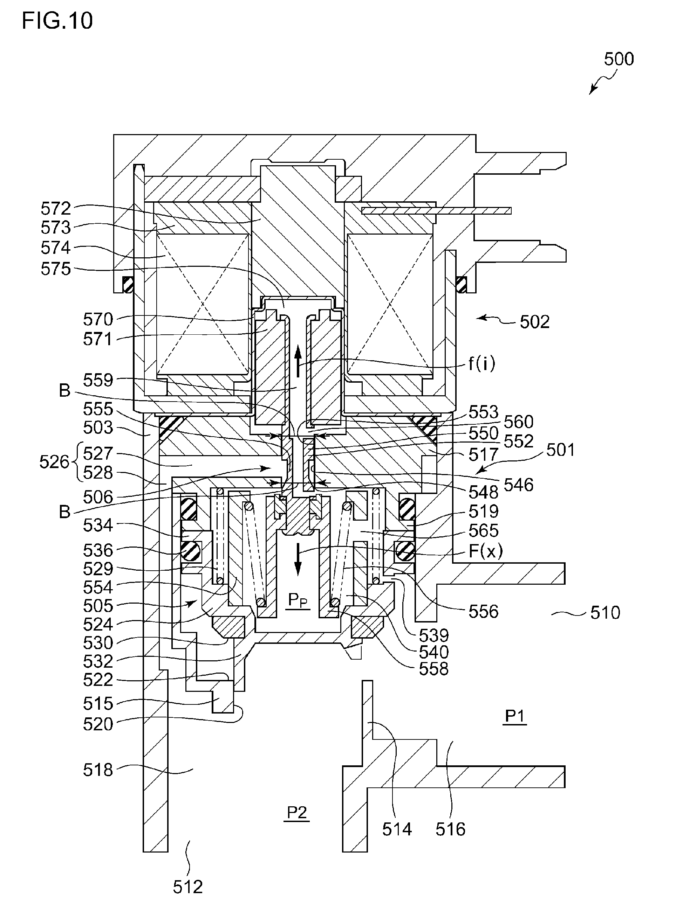

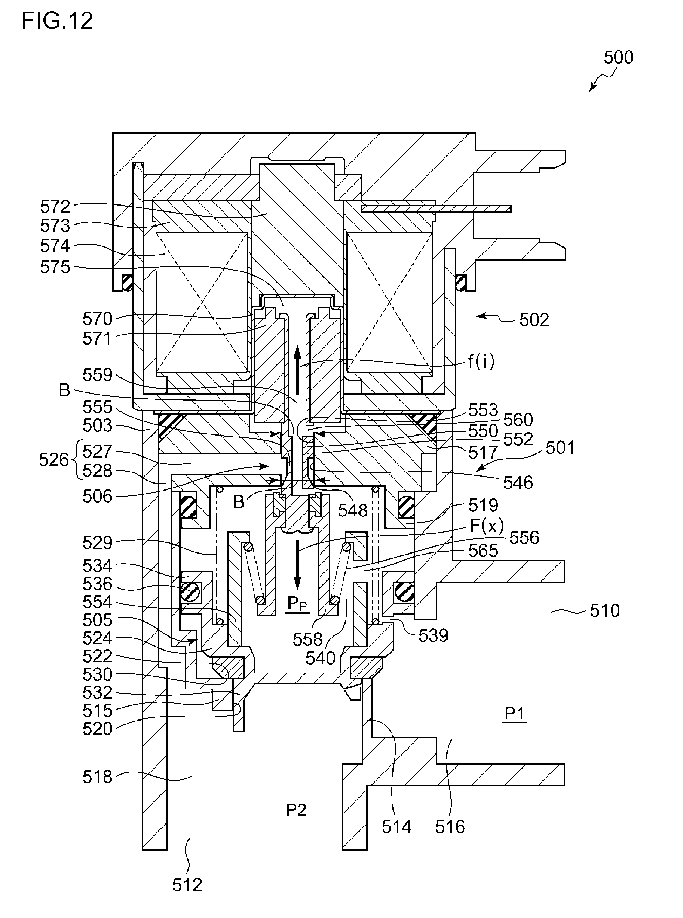

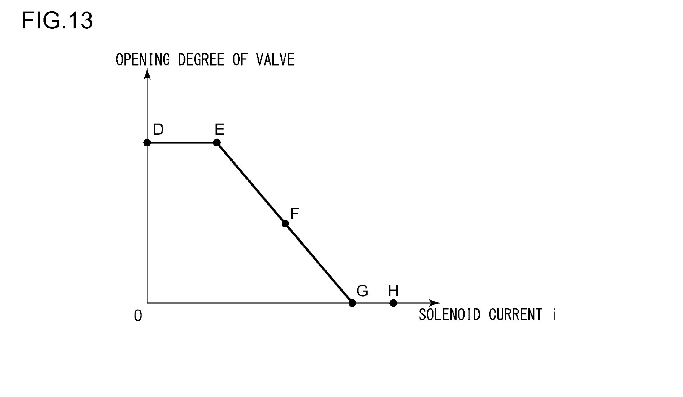

The electromagnetic valve 500 is formed by assembling a valve unit 501 and a solenoid 502. In one example, the electromagnetic valve 500 is formed as a proportional valve whose opening degree can be an arbitrary value in accordance with a current supplied to the solenoid 502. Fig. 9 illustrates a state of the electromagnetic valve 500 occurring when a current is not supplied to the solenoid 502. Each of Figs. 10 to 12 illustrates a state in which a control current supplied to the solenoid 502 is sequentially increased. Fig. 12 illustrates the electromagnetic valve 500 in a fully-closed state. Fig. 13 is a graph showing the relationship between the control current and the opening degree of the electromagnetic valve 500. Point D to Point G illustrated in Fig. 13 correspond to the states illustrated in Figs. 9 to 12, respectively.

The valve unit 501 is formed to house a main valve 505 and a pilot valve 506 in a bottomed cylindrical body 503, these valves arranged coaxially with the center axis. The solenoid 502 is attached to the upper surface of the body; an inlet port 510 is provided in a side part of the body 503; and an outlet port 512 is provided on the lower surface of the body. In one example, the electromagnetic valve 500 is used as a control valve in a refrigeration cycle of an automotive air-conditioner, in which an inlet port 510 communicates with the upstream passage in the refrigeration cycle and an outlet port 512 communicates with the downstream passage therein.

A first partition wall 514 extending, between the inlet port 510 and the center axis, upward from the lower surface of the body is provided in the body 503. A second partition wall 515, extending radially inward from the side opposite to the side part of the body 503 in which the inlet port 510 is provided, is provided. The first partition wall 514 and the second partition wall 515 divide the inside of the body 503 into a high-pressure chamber 516 and a low-pressure chamber 518. The high-pressure chamber 516 communicates with the inlet port 510, while the low-pressure chamber 518 with the outlet port 512. A communication passage 526 for communicating the low-pressure chamber 518 with a back-pressure chamber 540 is formed in the second partition wall 515.

A cylindrical inner circumferential surface is formed by the first partition wall 514 and the second partition wall 515, and a main valve hole 520 is formed by the cylindrical inner circumferential surface. A main valve seat 522 is formed by the upstream opening end of the main valve hole 520 (see also Fig. 12). A main valve element 524 having a stepped cylindrical shape is arranged in the high-pressure chamber 516. The main valve element 524 opens or closes the main valve 505 by being detached from or attached to the main valve seat 522. The lower portion 530 of the cylindrical main body of the main valve element 524 is detached from or attached to the main valve seat 522. A plurality of legs 532 are extended downward in the axial direction from the lower portion 530 (in the view, only one of the legs is illustrated), so that the main valve element 524 is slidably supported by the inner circumferential surface of the main valve hole 520.

The main valve element 524 is formed to have double cylinders coaxial with each other. The outer cylinder has a stepped cylindrical shape with a bottom at the lower portion, while the inner cylinder is formed as a main valve side spring mounting portion 554. A flange portion 534 extending radially outward is provided at the upper end of the outer cylinder of the main valve element 524 to be slidably supported by the inner circumferential surface of the body 503. An O-ring 536 for sealing is fitted onto the outer circumferential surface of the flange portion 534. The back-pressure chamber 540 is partitioned from the high-pressure chamber 516 by the main valve element 524 including the flange portion 534. Accordingly, the back-pressure chamber 540 is formed by: a side wall including the second partition wall 515 of the body 503; a disk-shaped body upper end 517; and the main valve element 524.

A locking portion 519 for locking the main valve element 524 is annularly provided on the radially outer circumference of the lower surface of the body upper end 517. The locking portion 519 is provided at a radial position corresponding to the flange portion 534 of the main valve element 524, so that an upward movement of the main valve element 524 is limited. A spring 529 for biasing the main valve element 524 to the valve-closing direction is interposed between the main valve element 524 and the upper surface of the back-pressure chamber 540. The spring 529 is provided immediately inside the flange portion 534 with respect to the radial direction. In the initial state illustrated in Fig. 9, the main valve element 524 is brought into contact with the locking portion 519. In this case, because the pilot valve 506 is opened, the intermediate pressure Pp is equal to the downstream pressure P2.

An orifice 539 as a leak passage communicating the high-pressure chamber 516 and the back-pressure chamber 540 is provided on the side surface of the main valve element 524 near to the inlet port 510. The pressure P1 in the high-pressure chamber 516 (referred to as "upstream pressure P1") becomes, in the back-pressure chamber 540, the intermediate pressure Pp by passing through the orifice 539. Further, the upstream pressure P1 is reduced by passing through the main valve 505 and becomes the pressure P2 (referred to as "downstream pressure P2"). The intermediate pressure Pp is changed by an opened and closed state of the pilot valve 506. The passage connecting the high-pressure chamber 516 and the low-pressure chamber 518 via the main valve 505 forms a "main passage" in the electromagnetic valve 500, while the passage connecting the high-pressure chamber 516 and the low-pressure chamber 518 via the back-pressure chamber 540, the pilot valve 506, and the communication passage 526 forms a "sub-passage" in the electromagnetic valve 500.

A through-hole is formed, coaxially with the center axis, at the center of the upper surface of the back-pressure chamber 540, and a sub-valve hole 546 is formed by the cylindrical inner circumferential surface of the through-hole. A sub-valve seat 548 is formed at the lower end of the sub-valve hole 546 near to the back-pressure chamber 540. Thus, the sub-valve hole 546 is formed in the body 503 of the electromagnetic valve 500. The sub-valve hole 546 is opened or closed with a spool-like pilot valve element 550 that forms the pilot valve 506 being detached from or attached to the sub-valve seat 548 in accordance with a control state of the pilot valve 506, as described later.

The sub-valve hole 546 communicates with a first communication passage 527. The first communication passage 527 extends radially outward from the center axis to the side wall of the body 503. The radial outmost end of the first communication passage 527 communicates with a second communication passage 528. The second communication passage 528 extends, in the side wall of the body 503, downward in the axial direction from the radial outmost end of the first communication passage 527 to the low-pressure chamber 518. That is, the second communication passage 528 extends in the axial direction along the radial outermost of the back-pressure chamber 540. The communication passage 526 for communicating the back-pressure chamber 540 with the low-pressure chamber 518 is formed by the first communication passage 527 and the second communication passage 528.

The pilot valve element 550 has an elongated body that is formed of, for example, a stainless material, and extends along the center axis. The pilot valve element 550 is fixed to a plunger 571 with penetrating the plunger 171 along its axis line and with the upper end of the pilot valve element being caulked. The lower end of the pilot valve element 550 is fixed to the upper portion of a pilot side spring mounting portion 558 by being caulked. The pilot valve element 550 has a diameter-reduced portion 555 at the center thereof. A cylindrical guide portion 552 extends, on the upper side of the diameter-reduced portion 555, toward the plunger 571, and the guide portion is slidably supported by a cylindrical guide hole 553 formed at the center of the body upper end 517. This guide hole 553 is formed to have an effective diameter B equal to that of the pilot valve element 550.

A through-hole 559 is formed at the center of the pilot valve element 550. The through-hole 559 communicates the inside of the solenoid 102 and the back-pressure chamber 540 with each other. The through-hole 559 communicates the space in the solenoid 102 between the plunger 571 and a fixed iron core 572 and the back-pressure chamber 540 with each other. A side hole 560 for communicating the space between the solenoid 102 and the body 503 with the back-pressure chamber 540 is also provided in the middle of the through-hole 559. The back-pressure cancellation in the pilot valve element 550 is achieved by the relationship between the side hole 560 and the aforementioned effective diameter.

A spring 556 as an elastic member in the present example is interposed between the main valve side spring mounting portion 554 and the pilot side spring mounting portion 558. The main valve side spring mounting portion 554 and the pilot side spring mounting portion 558 are cylindrical members located coaxilly with each other, and the upper end of the main valve side spring mounting portion 554 and the lower end of the pilot side spring mounting portion 558 are connected to each other by the spring 556. Accordingly, the pilot side spring mounting portion 558 is disposed inside the spring 556, while the main valve side spring mounting portion 554 is disposed between the spring 556 and the spring 529 located outside the spring 556. Thus, the spring 556 is housed in the back-pressure chamber 540 with one end of the spring being attached to the pilot valve element 550 and the other end being attached to the main valve element 524. The pilot valve element 550 is biased to the valve-opening direction by the spring 556. A side hole 565 for introducing the fluid that has flowed in from the orifice 539 to the sub-valve hole 546 is formed on the side surface of the main valve side spring mounting portion 554 near to the inlet port 510.

According to the aforementioned spring mounting structure, the mounting member and the spring, each being located coaxially with each other and having a diameter different from that of the other, are housed in the back-pressure chamber 540 such that they are overlapped each other in the axial direction. Accordingly, the electromagnetic valve 500 can be made small in the axial direction by making the axial length of the spring mounting structure to be small. Further, the relatively long spring 556 can be compactly housed in the back-pressure chamber 540. Instead of this, however, the pilot side spring mounting portion 558 and the main valve side spring mounting portion 554 may be disposed so as to be spaced apart from each other in the axial direction and a spring may be provided in a state where the spring is pulled downward in the axial direction from the lower end of the pilot side spring mounting portion 558 to the upper end of the main valve side spring mounting portion 554. In this case, elastic force is exerted on the pilot valve element 550 by the tension of the spring.

The sub-valve hole 546 has a channel sectional area sufficiently larger than that of the orifice 539. That is, the flow rate in the sub-valve hole 546 is larger than that in the orifice 539. Accordingly, the intermediate pressure Pp in the back-pressure chamber 540, occurring when the pilot valve 506 is opened, is maintained at the downstream pressure P2 by the flow through the sub-valve hole 546 and the communication passage 526. On the other hand, when the pilot valve 506 is closed, the intermediate pressure Pp is increased by the inflow through the orifice 539. In one example, the sub-valve hole 546 has a channel sectional area at least ten times larger than that of the orifice 539.

The solenoid 502 has a bottomed cylindrical sleeve 570 attached so as to seal the upper opening of the body 503. In the sleeve 570, the plunger 571 as a first iron core is arranged to be movable in the axial direction integrally with the pilot valve element 150, and the fixed iron core 572 as a second iron core is attached to the upper portion of the outside of the sleeve 570. The fixed iron core 572 is disposed, so as to create a space 575 with the plunger 571, at a position opposite to the pilot valve element 550 with respect to the axial direction. The space 575 between the plunger 571 and the fixed iron core 572 acts as a magnetic gap in the magnetic circuit in the solenoid 502. A bobbin 573 is provided on the outer circumference of the sleeve 570 and an electromagnetic coil 574 is wound around the bobbin 573.

Similarly to First Embodiment, a stepped shape for making the suction force characteristic of the solenoid to be flat is provided at each of the upper end of the plunger 571 and the lower end of the fixed iron core 572. Alternatively, the stepped-shape may be omitted in the same way as in First Embodiment and the surface of the plunger 571 and that of the fixed iron core 572, the surfaces facing each other, are formed to be flat, respectively.

When the electromagnetic valve 500 is made to function as a proportional valve, a current to be supplied to the solenoid 502 is controlled within a control range determined by both a minimum current, by which a desired minimum opening degree is achieved (e.g., non-application of power by which a fully-closed state is achieved), and a maximum current, by which a desired maximum opening degree is achieved (e.g., a predetermined current by which a fully-opened state is achieved). The mechanical characteristic of the spring 556 is set such that the range of an amount of elastic deformation of the spring 556 is larger than the stroke of the plunger 571 in the control range. The range of elastic deformation corresponding to the control current range can be made large by, for example, making the spring constant of the spring 556 to be relatively small.

The electromagnetic valve 500 formed as stated above can be made to function as a pilot-operated normally-open electromagnetic proportional valve by which the flow from the upstream side to the downstream side can be controlled at an arbitrary opening degree in accordance with a current supplied to the solenoid 502. Hereinafter, the movements will be described in detail with reference to Fig. 9 to 13.

As stated above, Fig. 9 illustrates the initial state in which the solenoid 502 is turned off and the electromagnetic valve 500 is fully opened (Point D in Fig. 13). In this state (state of non-application of power), the solenoid force does not work, and hence each of the main valve element 524 and the pilot valve element 550 is biased to the valve-opening direction by the spring 556, thereby allowing the main valve 505 and the pilot valve 506 to be in a valve-opened state. The fluid 540 is drawn out from the back-pressure chamber 540 to the downstream side via the communication passage 526 and the sub-valve hole 546, which makes the intermediate pressure Pp to be equal to the downstream pressure P2. In addition, the main valve 505 is opened, and accordingly the flow from the inlet port 110 on the upstream side to the outlet port 112 on the downstream side is allowed.

Point E to Point G illustrated in Fig. 13 correspond to the states illustrated in Figs. 10 to 12, respectively. As illustrated in Fig. 13, the suction force is smaller than the biasing force before the control current reaches Point E, and hence the fully-opened state illustrated in Fig. 9 is maintained. Fig. 10 illustrates a state in which the pilot valve element 550 is opened by a minute opening degree with the pilot valve element 550 approaching the sub-valve seat 548 after the plunger 571 has been pulled up by the electromagnetic suction force generated by the supply of a control current. In this state, the solenoid force f(i) is balanced with the elastic force F(x) of the spring 556. In the illustrated example, the spring 556 is compressed. An amount of elastic deformation of the spring 556 is equal to an amount of reduction in the magnetic gap, the reduction occurring due to the upward movement of the pilot valve element 550 and the plunger 571. The opening degree of the main valve element 124 up to this point is fully opened, in the same way as in Fig. 9.

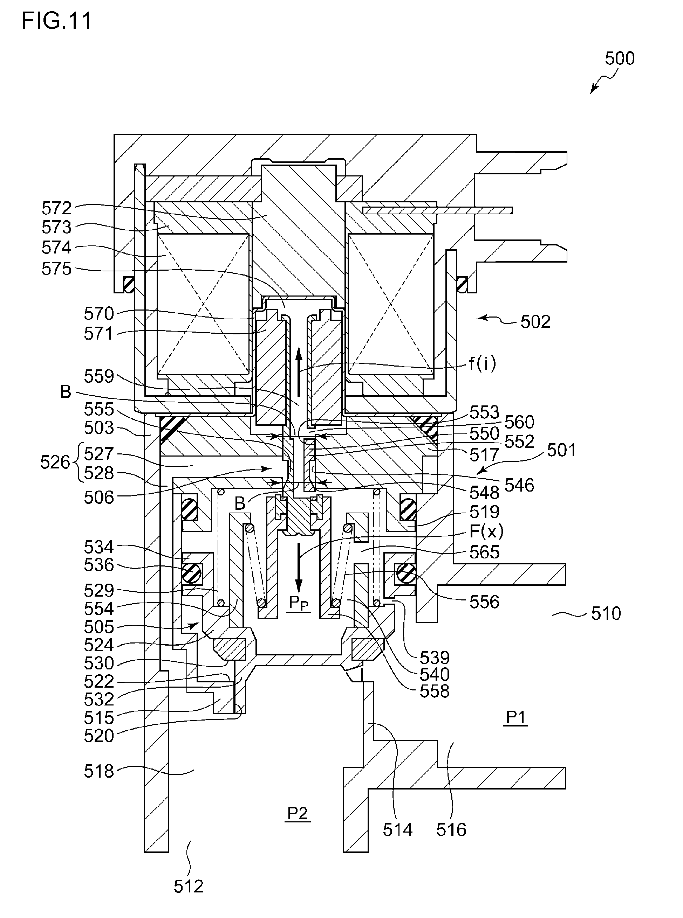

As illustrated in Fig. 13, the opening degree of the valve is proportionally reduced, when the control current is increased from Point E. In Point F illustrated in the view, a desired opening degree of the valve is achieved by controlling the control current, as illustrated in Fig. 11. As illustrated in Figs. 10 to 12, in the proportionally controlling mode of the electromagnetic valve 500, the space between the plunger 571 and the fixed iron core 572 is maintained to be approximately constant. That is, the plunger 571 is substantially stationary in this case.

A channel sectional area of the sub-valve hole 546, which is sufficiently larger than that of the orifice 539, contributes to making an amount of displacement of the plunger 571 to be suppressed to a very minute amount. The sensitivity of the intermediate pressure Pp in the back-pressure chamber 540 can be made large, with respect to a minute movement of the pilot valve element 506, with the sub-valve hole 546 having a sufficiently large channel sectional area. That is, when the pilot valve 506 is slightly opened in the proportionally controlling mode, the intermediate pressure Pp is rapidly reduced to the downstream pressure P2.

The pressure in the back-pressure chamber 540 is increased through the orifice 539 by closing the pilot valve element 550. The main valve element 524 is moved in the valve-closing direction (downward in the view) by the differential pressure working at this moment. Compressive elastic deformation is applied to the spring 556 by this downward movement. Accordingly, the downward elastic force working on the pilot valve element 550 is increased. The elastic force is increased by the movement of the main valve element 524, the movement continuing until the elastic force is made balanced with the solenoid suction force corresponding to the control current. An amount of deformation of the spring 556 is directly associated with an amount of movement of the main valve element 524. When the control current is further increased and reaches Point G illustrated in Fig. 13, the main valve element 124 is seated, as illustrated in Fig. 12, thereby allowing the main valve 505 to be closed. When the control current is reduced, the main valve element 524 and the pilot valve element 550 are moved in the direction opposite to that of the aforementioned movements, thereby allowing the valve to be returned to the open state illustrated in Fig. 9.

When the main valve element 524 is displaced from the desired opening degree state, as illustrated in Fig. 11 for example, by an additional opening degree Δd in the valve-closing direction (downward in the view), the pilot valve 506 moves in the valve-opening direction by the elastic force of the spring 556. Then, the pressure Pp in the back-pressure chamber 140 approaches the downstream pressure P2, and hence the main valve element 524 is returned to the valve-opening direction (upward) by an effect of the differential pressure. Conversely, when the main valve element 524 is displaced by an opening degree Δd in the valve-opening direction (upward), an amount of deformation of the spring 556 and thus the spring force thereof is also reduced. Accordingly, a reduction in the spring force acts as a restoring force, thereby allowing the pilot valve 506 to move in the valve-closing direction (upward). Thus, the intermediate pressure Pp is increased such that the main valve element 524 is eventually returned to the valve-closing direction (downward). Thus, the opening degree of the main valve 505 can be maintained at a degree in accordance with the control current.

A valve structure according to Second Embodiment provides a novel structure for positioning a piston that is moved upon the fluid pressure in a pressure chamber by using an operation of a valve element for regulating the pressure in the pressure chamber. This structure includes a spring whose one end is attached to the piston and the other end is attached to the valve element and that exerts elastic force on the valve element in the direction opposite to that of the electromagnetic suction force of a solenoid. The valve element is operated to regulate the pressure in the pressure chamber under the balance between the elastic force that is generated in accordance with an amount of deformation of the spring in association with a movement of the piston by an effect of the fluid pressure, and the electromagnetic suction force. The piston is positioned at a stop position where the spring is deformed so as to generate the elastic force to be balanced with the electromagnetic force. The electromagnetic valve 500 is an example of an application in which a valve element having this valve structure is used as the pilot valve element 550 and the piston is used as the main valve element 524.

The electromagnetic valve 500 has a built-in stroke amplification mechanism for amplifying the stroke of the main valve 505. This stroke amplification mechanism includes the spring 556 for making the pilot valve element 550 stop at a balanced position by exerting the spring force on the pilot valve element 550 in the direction opposite to that of the solenoid force. The characteristic of the spring 556 is set such that an amount of deformation of the spring 556 is larger than an amount of movement of the plunger 517 in the control current range. The main valve is moved in accordance with an amount of deformation of the spring 556. Thus, a desired stoke of the main valve can be achieved by amplifying a minute amount of suction movement in a small solenoid. Accordingly, a pilot-operated electromagnetic valve excellent in practicality can be formed by using a small solenoid as a drive source.

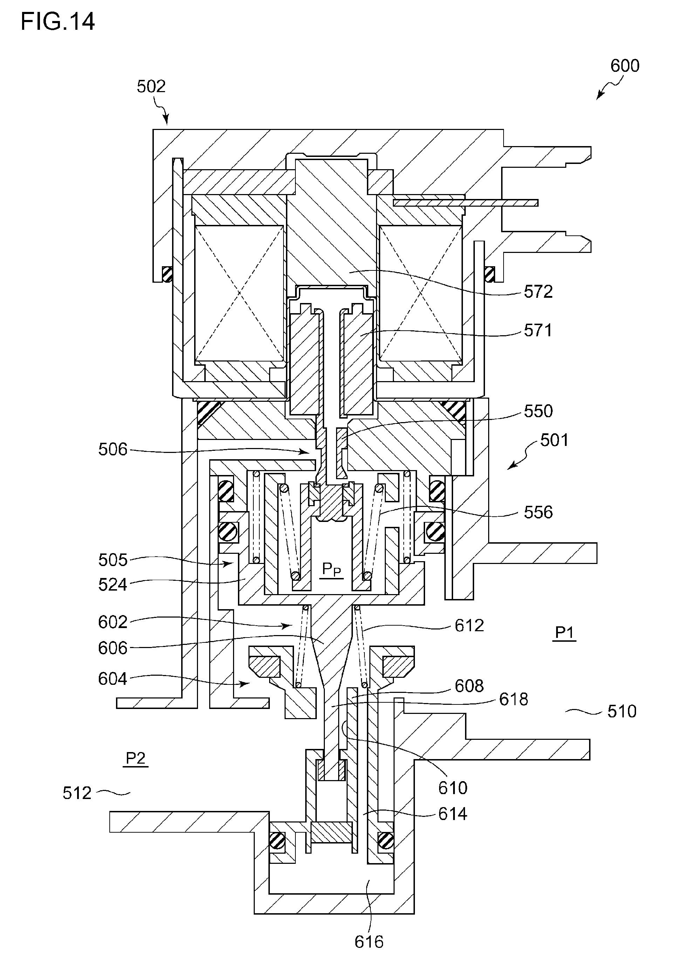

A variation of the electromagnetic valve 500 according to Second Embodiment will be described with reference to Figs. 14 to 16. Figs. 14 to 16 are sectional views each illustrating an electromagnetic valve 600 that is another example in which the pilot mechanism in the electromagnetic valve 500 according to Second Example is adopted. In Figs. 14 to 16, parts similar to those illustrated in Fig. 9 will be denoted with the same reference numerals and description will be appropriately omitted for avoiding redundancy.

In the electromagnetic valve 600, a small flow rate proportional valve 602, including the aforementioned pilot mechanism, and a large flow rate valve 604, through which a flow whose flow rate is larger than the small flow rate can be made possible, are provided in series in the axial direction. The proportional valve 602 and the large flow rate valve 604 are disposed in this order from the upstream side.

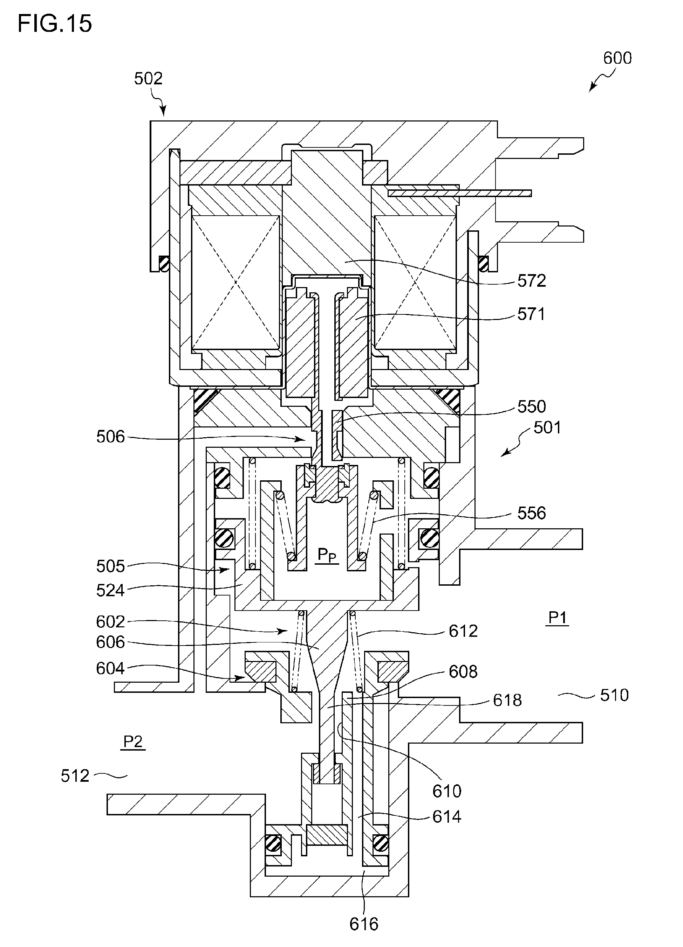

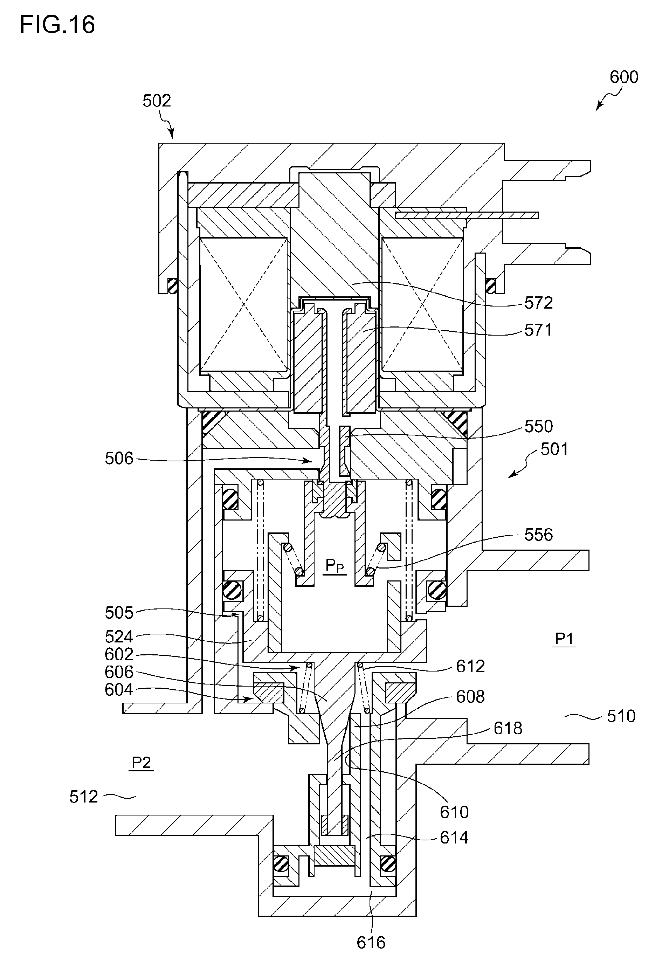

Fig. 14 illustrates the electromagnetic valve 600 in a state of non-application of power. In this state, each of the proportional valve 602 and the large flow rate valve 604 is in a fully-opened state. Figs. 15 and 16 illustrate states in which a control current has been sequentially increased. In the electromagnetic valve 600, as the control current is increased, the large flow rate valve 604 is preferentially closed, while a fully-opened state of the proportional valve 602 is being maintained, and after the large flow rate valve 604 is closed, an opening degree of the proportional valve 602 is controlled. Fig. 15 illustrates a state in which the closing of the large flow rate valve 604 has been completed and the proportional valve 602 is fully opened. Fig. 16 illustrates a state in which the proportional valve 602 is also fully closed. In addition, in Fig. 16, a current larger than the proportional control range of the proportional valve 602 is supplied to the solenoid 502. Accordingly, the pilot valve element 550 is pulled further upward in comparison with the state illustrated in Fig. 15, thereby allowing the pilot valve 506 to be completely closed. The state illustrated in Fig. 16 corresponds to Point H located on the right side from Point G illustrated in Fig. 13.

The proportional valve 602 has a similar structure to that of the electromagnetic valve 500 illustrated in Fig. 9. However, a protruding portion 606 is extended downward in the axial direction from the center of the main valve element 524. The protruding portion 606 has, in its middle, a tapered portion whose diameter is gradually reduced downward in the axial direction, and further extends toward a tip portion 618 from the tapered portion. This tip portion 618 is inserted into a valve hole 610 formed in a valve element 608 in the large flow rate valve 604. The flow rate of the proportional valve 602 is controlled in accordance with the distance between the upper end of the valve hole 610 and the tapered portion of the protruding portion 606. A maximum flow rate of the proportional valve 602 can be achieved by the tip portion 618 of the protruding portion 606 extending downward from the tapered portion. A spring 612 for biasing the valve element 608 to the valve-closing direction is interposed between the main valve element 524 in the proportional valve 602 and the valve element 608 in the large flow rate valve 604.

In addition, a channel 614 for the back-pressure cancellation of the valve element 608 is formed in the valve element 608 in the large flow rate valve 604. This channel 614 connects the inlet port 510 to a back-pressure chamber 616 for the large flow rate valve formed on the lower side of the valve element 608. Accordingly, the upstream pressure P1 is introduced into the back-pressure chamber 616.

### [Third Embodiment]

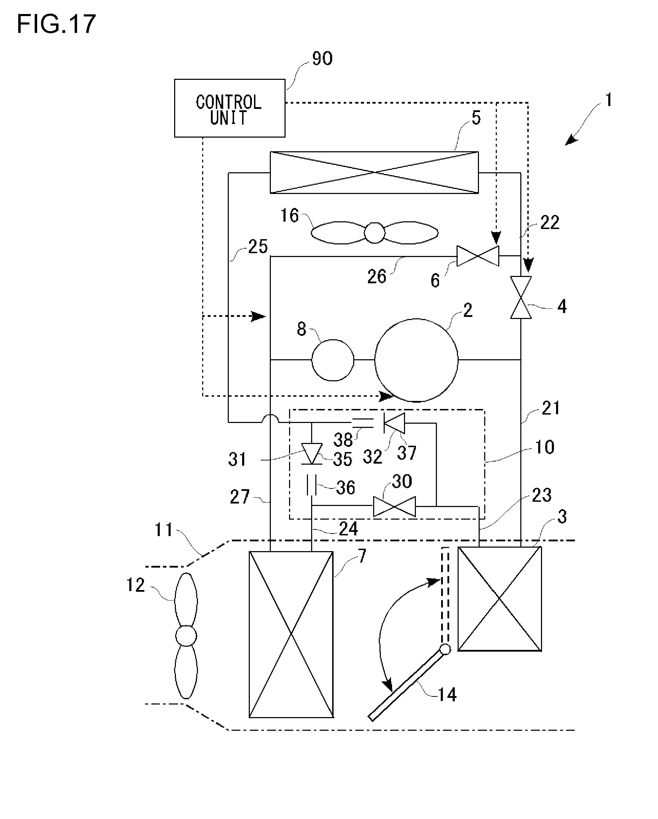

Fig. 17 is a system structure view illustrating a schematic structure of an automotive air-conditioner suitable for an electromagnetic proportional valve according to Third Embodiment. In the present embodiment, the electromagnetic proportional valve according to First Embodiment of the present invention is embodied as a control valve for controlling the refrigeration cycle of an air-conditioner for an electric vehicle. In the following description, parts similar to those illustrated in First Embodiment will be denoted with the same reference numerals and description will be appropriately omitted for avoiding redundancy.

An automotive air-conditioner 1 comprises a refrigeration cycle (refrigerant circulation circuit) in which a compressor 2, an indoor condenser 3, a first control valve 4, an outdoor heat exchanger 5, a second control valve 6, an evaporator 7, an accumulator 8, and an actuator block 10 are connected to each other with pipes. The automotive air-conditioner 1 is formed as a heat pump type air conditioner in which air-conditioning of a vehicle interior is performed by using the heat of an alternative for chlorofluorocarbon (HFC-134a) as a refrigerant, during the course in which the alternative for chlorofluorocarbon circulates in the refrigeration cycle while changing the states thereof.

The automotive air-conditioner 1 has a duct 11 for exchanging the heat of air, in which an indoor fan 12, the evaporator 7, and the indoor condenser 3 are arranged in this order from the upstream side in the flow direction of the air. An air mix door 14 is rotatably provided on the upstream side of the indoor condenser 3 such that the ratio of an amount of the wind passing through the indoor condenser 3 to that of the wind bypassing the indoor condenser 3 is regulated. Further, an outdoor fan 16 is disposed so as to face the outdoor heat exchanger 5.

The compressor 2 is formed as an electrically-driven compressor for housing a motor and a compression mechanism in its housing. The compressor 2 is driven by a current supplied from a battery (not shown), and a discharge capacity of the refrigerant is changed in accordance with the number of revolutions of the motor. Compressors of various types, such as a reciprocating type, rotary type, and scroll type, can be adopted as the compressor 2, but the electrically-driven compressor is publicly-known itself, and hence the description thereof is omitted.

The indoor condenser 3 is provided in a vehicle interior and functions as an auxiliary condenser for radiating the heat of the refrigerant, separately from the outdoor heat exchanger 5. That is, the heat of the refrigerant at high temperature and high pressure, discharged from the compressor 2, is radiated while the refrigerant is passing through the indoor condenser 3. The heat of the air distributed in accordance with the opening degree of the air mix door 14 is exchanged during the course in which the air passes through the indoor condenser 3.

The first control valve 4 regulates the opening degree of a main channel for connecting the indoor condenser 3 and the outdoor heat exchanger 5 to each other. The first control valve 4 includes both a valve portion for opening and closing the main channel and a solenoid for driving the valve portion, and the valve portion is opened or closed in accordance with presence or absence of a supply current.

The outdoor heat exchanger 5 is disposed outside the vehicle interior: in order to function as an outdoor condenser for radiating the heat of the refrigerant passing through the exchanger 5 during a cooling operation; on the other hand, in order to function as an outdoor evaporator for evaporating the refrigerant passing through the exchanger 5 during a heating operation. The outdoor fan 16 is a suction type fan in which open air is introduced therein by rotatably driving an axial fan by a motor. The outdoor heat exchanger 5 performs heat exchange between the open air and the refrigerant.

The indoor condenser 3 and the outdoor heat exchanger 5 are connected in parallel to the compressor 2, not in series. A first passage 21 on the high-pressure side, the passage 21 connecting the compressor 2 and the indoor condenser 3 to each other, and a second passage 22 on the high-pressure side, the passage 22 connecting the compressor 2 and the outdoor heat exchanger 5 to each other, branch from each other at the downstream side of the compressor 2, and the first control valve 4 is provided so as to open and close the second passage 22.

A bypass passage 26 branches in the middle of the second passage 22, which leads to the accumulator 8 and eventually to the compressor 2. The bypass passage 26 branches from the second passage 22 between the outdoor heat exchanger 5 and the first control valve 4. The second control valve 6 is provided so as to open and close the bypass passage 26. The second control valve 6 regulates the opening degree of the bypass passage 26. On the other hand, a return passage 27 on the downstream side of the evaporator 7 is connected, on the downstream side of the second control valve 6, to the bypass passage 26, which leads to the accumulator 8 and eventually to the compressor 2.

The second control valve 6 includes a valve portion for opening and closing its main channel and a solenoid for driving the valve portion, and regulates the opening degree of the valve portion in accordance with a supply current. The second control valve 6 is formed so as to be able to function as a constant differential pressure valve working such that its before and after differential pressure (differential pressure between the upstream pressure and the downstream pressure of the second control valve 6) becomes constant in accordance with the control current. That is, the valve portion in the second control valve 6 moves autonomously such that the before and after differential pressure takes a value associated with a current supplied to the solenoid.

The evaporator 7 is disposed in a vehicle indoor to function as an indoor evaporator for evaporating the refrigerant passing through the inside thereof. That is, the refrigerant whose temperature and pressure have both became low by adiabatic expansion evaporates while passing through the evaporator 7. The air introduced from the upstream side of the duct 11 is cooled by the latent heat of evaporation. At the time, the air that has been cooled and dehumidified is distributed, in accordance with the opening degree of the air mix door 14, into air passing through the indoor condenser 3 and air bypassing the condenser 3. The air passing through the indoor condenser 3 is heated while passing through it. The air passing through the indoor condenser 3 and the air bypassing the condenser 3 are mixed together on the downstream side of the indoor condenser 3 to be regulated to have the target temperature, and supplied to the vehicle indoor from a nozzle (not shown). The mixed air is blown out, for example, from a vent nozzle, foot nozzle, defroster nozzle, or the like, toward a predetermined place in the vehicle interior.

The accumulator 8 is a device in which the refrigerant sent out from the evaporator is stored after being subjected to gas-liquid separation, and has a liquid phase portion and a gas phase portion. Accordingly, if an expected amount or more of a liquid refrigerant is drawn out from the evaporator 7, the liquid refrigerant can be stored in the liquid phase portion and the refrigerant in the gas phase portion can be drawn out to the compressor 2. As a result, there is no trouble in the compression movements of the compressor 2. However, it is configured in the present embodiment that part of the refrigerant in the liquid phase portion can be supplied to the compressor 2, thereby allowing a necessary amount of lubricating oil to be returned to the compressor 2.

An actuator block 10 for connecting together the indoor condenser 3, the outdoor heat exchanger 5, and the evaporator 7 is formed. An internal passage for making the refrigerant pass therethrough is formed in the housing of the actuator block 10, and a third control valve 30 that will be described later, a first differential pressure orifice 31, and a second differential pressure orifice 32 are arranged. A third passage 23 on the downstream side of the indoor condenser 3, a fourth passage 24 on the upstream side of the evaporator 7, and a fifth passage 25 extending from the outdoor heat exchanger 5 are connected to the actuator block 10, respectively. The upstream side of the third control valve 30 communicates with an internal passage leading to the third passage 23 and the downstream side thereof communicates with an internal passage leading to the fourth passage 24.

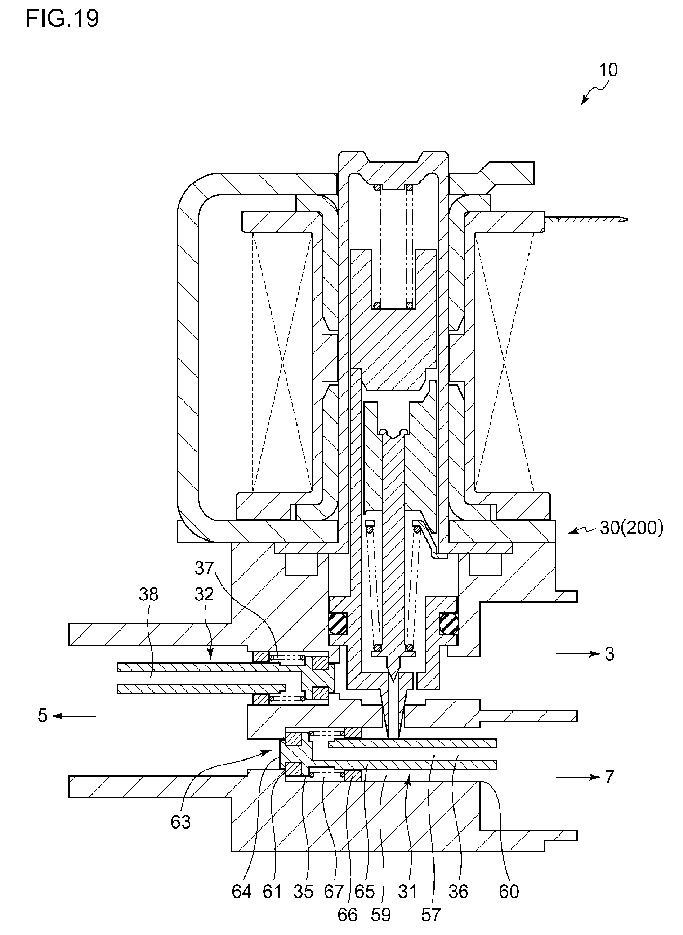

As illustrated in Figs. 17 and 19, the first differential pressure orifice 31 is formed with both a first differential pressure valve 35, which is opened when the before and after differential pressure is larger than or equal to a preset value, and a first orifice 36 having a predetermined opening area being disposed in series. The upstream side of the first differential pressure orifice 31 communicates with an internal passage leading to the fifth passage 25 and the downstream side thereof communicates with an internal passage leading to the fourth passage 24.

The second differential pressure orifice 32 is formed with both a second differential pressure valve 37, which is opened when the before and after differential pressure is larger than or equal to a preset value, and a second orifice 38 having a predetermined opening area being disposed in series. The upstream side of the second orifice 32 communicates with an internal passage leading to the third passage 23 and the downstream side thereof communicates with an internal passage leading to the fourth passage 24. That is, the upstream side of the third control valve 30 communicates with the upstream side of the second differential pressure orifice 32 and the downstream side of the third control valve 30 communicates with the downstream side of the first differential pressure orifice 31. The downstream side of the second differential pressure orifice 32 communicates with the upstream side of the first differential pressure orifice 31.

The automotive air-conditioner 1 formed as stated above is controlled by a control unit 90. The control unit 90 includes: a CPU for performing various arithmetic processing; a ROM for storing various control programs; a RAM to be used as a work area for storing data and performing programs; and an input/output interface, etc. Signals from non-illustrated various sensors and switches, which are installed in the automotive air-conditioner 1, are inputted to the control unit 90. In order to achieve the room temperature that is set by a driver or passenger in a vehicle, the control unit 90 calculates a control variable of each actuator to output a control signal to the drive circuit of each actuator. In the illustrated example, the control unit 90 performs open and close control of the first control valve 4, open and close control (control for regulating opening degree) of the second control valve 6, open and close control (control for regulating opening degree) of the third control valve, as well as drive control of the compressor 2, the indoor fan 12, the outdoor fan 16 and the air mix door 14.

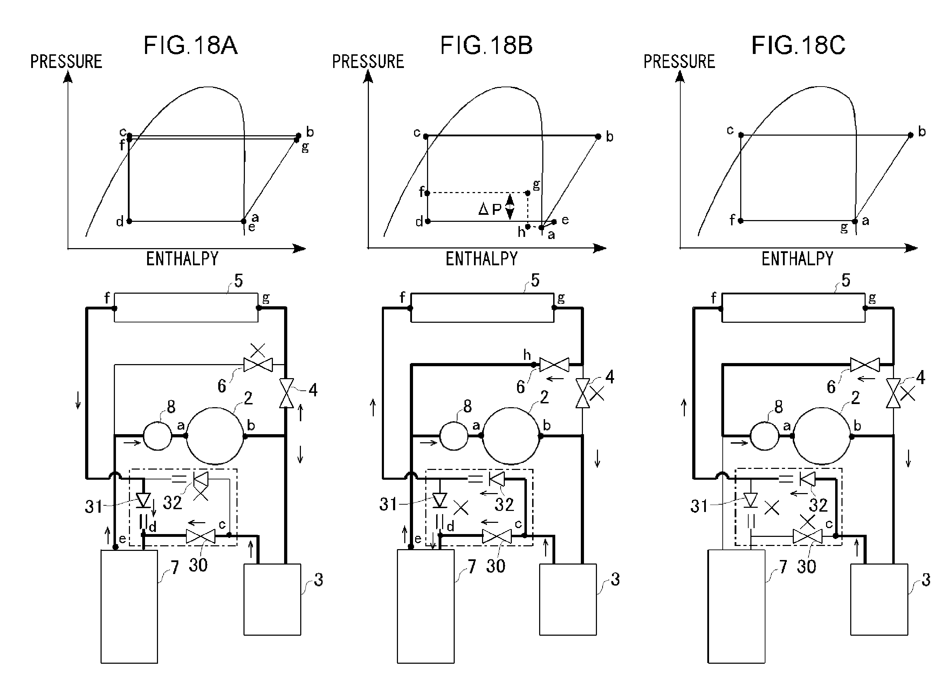

Subsequently, movements of the refrigeration cycle according to the present embodiment will be described. Figs. 18(A) to 18(C) are explanatory views illustrating movements of the automotive air-conditioner, in which: 18(A) illustrates a state during a cooling operation; 18(B) illustrates a state during a heating operation; and 18(C) illustrates a state during a specific heating operation. The "cooling operation" described herein means an operation state in which a cooling function functions more greatly than a heating function; the "heating operation" means an operation state in which a heating function functions more greatly than a cooling function; and the "specific heating operation" means a heating operation in which the evaporator 7 is made not to substantially function, and this operation is appropriately performed during a heating operation in accordance with the external environment, etc.

A Mollier diagram, by which the movements of the refrigeration cycle is explained, is illustrated in the upper portion of each view. The horizon axis represents enthalpy and the vertical axis represents various pressures. A state of movement of the refrigeration cycle is illustrated in the lower portion of each view. A heavy line and an arrow in the view represent the flow of the refrigerant, and symbols a to h correspond to those in the Mollier diagram. "X" in the view represents that the flow of the refrigerant is blocked. Although the lower portion in the view corresponds to Fig. 17, the structure in Fig. 17 is simply illustrated for convenience, such as omission of illustration of the air mix door 14, etc.

As illustrated in Fig. 18(A), during the cooling operation, the first control valve 4 is opened, while the second control valve 6 is closed. Accordingly, a differential pressure does not work on the second differential pressure orifice 32, thereby allowing the orifice to be maintained in a valve-closed state. Thus, the outdoor heat exchanger 5 functions as an outdoor condenser. That is, part of the refrigerant discharged from the compressor 2 returns to the compressor 2 after circulating so as to pass through the indoor condenser 3, third control valve 30, evaporator 7, and accumulator 8; while the other part thereof returns to the compressor 2 after circulating so as to pass through the first control valve 4, outdoor heat exchanger 5, first differential pressure orifice 31, evaporator 7, and accumulator 8.

That is, part of the gas refrigerant at high temperature and high pressure discharged from the compressor 2 is condensed by passing through the indoor condenser 3; while the other part thereof is condensed by passing through the outdoor heat exchanger 5. Thereafter, the refrigerant passing through the indoor condenser 3 is subjected to adiabatic expansion by the third control valve 30, and introduced into the evaporator 7 after becoming a gas-liquid two phase refrigerant at low temperature and low pressure. On the other hand, the refrigerant passing through the outdoor heat exchanger 5 is subjected to adiabatic expansion by the third differential pressure orifice 31, and introduced into the evaporator 7 after becoming a refrigerant at low temperature and low pressure. The ratio of the flow rate of the refrigerant in one circulation channel to that in the other circulation channel can be changed by regulating the opening degree of the third control valve 30. The refrigerant evaporates while passing through the evaporator 7, thereby allowing the air in the vehicle indoor to be cooled. The refrigerant drawn out from the evaporator 7 is introduced into the compressor 2 after passing through the accumulator 2, and at the time, the lubricating oil is returned to the compressor 2.

During the heating operation, the first control valve 4 is closed, while the second control valve 6 is opened, as illustrated in Fig. 18(B). Thus, the outdoor heat exchanger 5 functions as an outdoor evaporator. That is, part of the refrigerant discharged from the compressor 2 returns to the compressor 2 after circulating so as to pass through the indoor condenser 3, third control valve 30, evaporator 7, and accumulator 8; while the other part thereof returns to the compressor 2 after circulating so as to pass through the indoor condenser 3, second differential pressure orifice 32, outdoor heat exchanger 5, second control valve 6, and accumulator 8. The ratio of the flow rate of the refrigerant in one circulation channel to that in the other circulation channel can be changed by regulating the opening degree of the third control valve 30. The first differential pressure orifice 31 is maintained in a valve-closed state because the differential pressure working thereon is small.

That is, the gas refrigerant at high temperature and high pressure discharged from the compressor 2 is condensed by passing through the indoor condenser 3, and is subjected to adiabatic expansion by the third control valve 30. The refrigerant at low temperature and low pressure passing through the third control valve 30 evaporates in the evaporator 7, thereby allowing the air in the vehicle indoor to be cooled by the latent heat of evaporation. On the other hand, the refrigerant at low temperature and low pressure passing through the second differential pressure orifice 32 evaporates in the outdoor heat exchanger 5. At the time, the ratio of amounts of evaporation in both the evaporators of the outdoor heat exchanger 5 and the evaporator 7 is controlled by the before and after differential pressure ΔP in the second control valve 6. The control unit 90 controls the amount of heat exchange in the evaporator 7 in the course of achieving a preset temperature, and at the time, also regulates the ratio of the amount of evaporation of the circulating refrigerant in the outdoor heat exchanger 5 to that in the evaporator 7 by appropriately setting the before and after differential pressure ΔP. Thereby, the amount of evaporation of in the evaporator 7 can be secured and a dehumidification function can be secured. Further, the lubricating oil can be returned to the compressor 2 without retention in the evaporator 7.

As illustrated in Fig. 18(C), during the specific heating operation, the first control valve 4 is closed similarly in the heating operation, while the second control valve 6 is opened to a fully-opened state, not the state in the differential pressure control. The third control valve 30 is closed. As a result, the refrigerant discharged from the compressor 2 returns to the compressor 2 after circulating so as to pass through the indoor condenser 2, second differential pressure orifice 32, outdoor heat exchanger 5, second control valve 6, and accumulator 8. The first differential pressure orifice 31 is maintained in a valve-closed state because the differential pressure working thereon is small. The refrigerant bypasses the evaporator 7 not passing therethrough. Thereby, the refrigerant at low temperature and low pressure is not temporarily supplied to the evaporator 7, and hence it can be suppressed that the temperature in the evaporator 7 may become extremely low and the evaporator 7 may freeze. At the time, the evaporator 7 is warmed by the air passing through the duct 11.

In the present embodiment, when the ambient temperature is a preset extremely low temperature (e.g., -10°C or lower), the control unit 90 uses the heating operation illustrated in Fig. 18(B) and the specific heating operation illustrated in Fig. 18(C) in combination to perform control by alternately switching these operations. Thereby, a dehumidification performance can be secured by the heating operation and the freezing of the evaporator 7 can be prevented by the specific heating operation.

Fig. 19 is a sectional view illustrating a specific structure of the actuator block 10. As stated above, the third control valve 30, first differential pressure orifice 31, and second differential pressure orifice 32 are arranged in the actuator block 10. The third control valve 30 is equivalent to the electromagnetic valve 200 illustrated in Fig. 4. The structure and movement of the electromagnetic valve 200 are the same as already described in detail.

The first differential pressure orifice 31 functions as the first differential pressure valve (check valve) 35 that is opened when the before and after differential pressure is larger than or equal to a predetermined value, and also functions as the first orifice 36 for restricting an amount of flow of the refrigerant when the valve 35 is opened. That is, the first differential pressure orifice 31 has a cylindrical valve element 63 in which a valve element portion 64 and an orifice portion 65 are formed integrally with each other. A communication passage 59 is opened or closed with the valve element portion 64 being detached from or attached to a valve seat 61. A slide supporting portion 66 for slidably supporting the orifice portion 65 in the valve-opening and closing direction is formed in the communication passage 59. The orifice portion 65 extends from the slide supporting portion 66 to the downstream side beyond the lower end 60 of the communication passage 59. A spring 67 for biasing the valve element 63 to the valve-closing direction is interposed between the slide supporting portion 66 and the valve element portion 64. The second differential pressure orifice 32 has a structure similar to that of the first differential pressure orifice 31.

In the state where the valve element 63 is seated on the valve seat 61, the downstream pressure works across the inside of an orifice passage 57. When the valve element 63 starts being spaced apart from the valve seat 61, the upstream pressure simultaneously works on the upstream portion of the orifice passage 57. Because there is a pressure loss in the orifice passage 57, a pressure gradient is formed from the upstream end toward the downstream end, thereby allowing a fluid friction in the valve-opening direction to work on the valve element 63 by the refrigerant passing through the orifice passage 57. As a result, the opening of the valve element 63 is promoted simultaneously with the start of the opening, thereby the valve element 63 to be swiftly stabilized into a fully-opened state as illustrated. As a result, it can be prevented that the valve element 63 may remain at a minute opening degree and the function as an orifice (characteristic set in an orifice) can be sufficiently exhibited.

### [Fourth Embodiment]

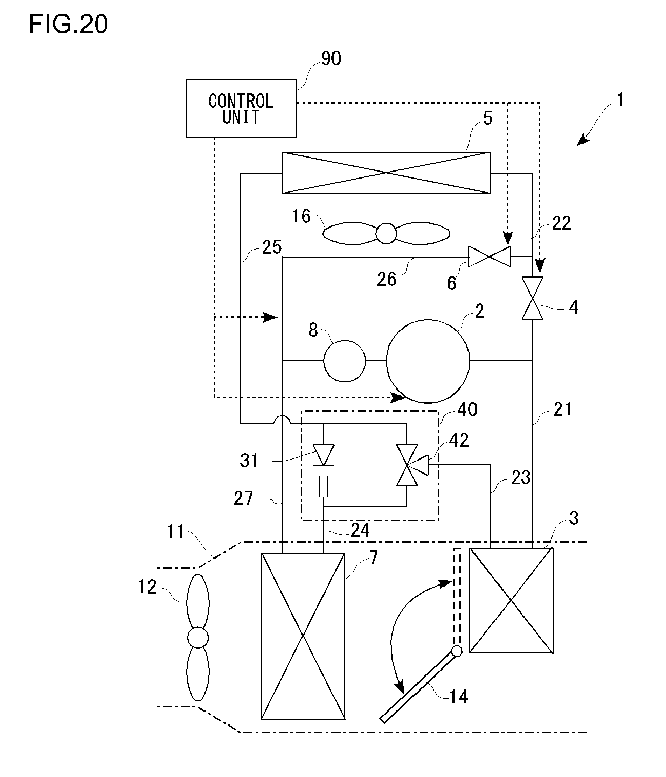

Fig. 20 is a system structure view illustrating a schematic structure of an automotive air-conditioner suitable for an electromagnetic proportional valve according to Fourth Embodiment. In the present embodiment, the electromagnetic valve according to Second Embodiment of the present invention is embodied as a control valve for controlling, for example, the refrigeration cycle of an air-conditioner for an electric vehicle. The refrigeration cycle according to Fourth Embodiment is the same as that in Third Embodiment, except a specific structure of an actuator block 40. In the following description, parts similar to those in one of First Embodiment to Third Embodiment will be denoted with the same reference numerals and description will be appropriately omitted for avoiding redundancy.

The actuator block 40 connects together the indoor condenser 3, the outdoor heat exchanger 5, and the evaporator 7. An internal passage for making the refrigerant pass therethrough is formed in the housing of the actuator block 40, and a fourth control valve 42 and the first differential pressure orifice 31 are arranged. The third passage 23 on the downstream side of the indoor condenser 3, the fourth passage 24 on the upstream side of the evaporator 7, and the fifth passage 25 extending from the outdoor heat exchanger 5 are connected to the actuator block 40, respectively. The fourth control valve 42 is formed as a three-way proportional valve. The upstream side of the fourth control valve 42 communicates with an internal passage leading to the third passage 23, and the downstream side thereof branches into two ways that respectively communicate with an internal passage leading to the fourth passage 24 and with an internal passage leading to the fifth passage 25. One of the two ways on the downstream side of the fourth control valve 42 communicates with the upstream side of the first differential pressure orifice 31 and the other way communicates with the downstream side thereof. The ratio of the flow rates in the two downstream side passages can be regulated by the fourth control valve 42.

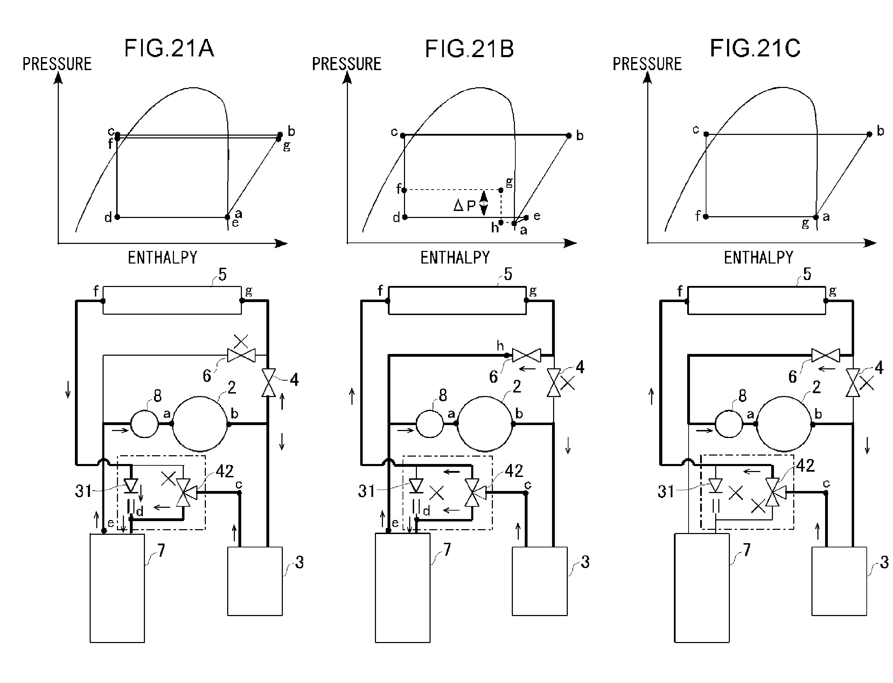

Figs. 21(A) to 21(C) are explanatory views illustrating, similarly to Figs. 18(A) to 18(C), movements of the automotive air -conditioner, in which: 21(A) illustrates a state during a cooling operation; 21(B) illustrates a state during a heating operation; and 21(C) illustrates a state during a specific heating operation. According to Figs. 21(A) to 21(C), it can be known that a refrigeration cycle in each of the cooling operation, the heating operation, and the specific heating operation, the refrigeration cycle being similar to that in Third Embodiment, is achieved by the control of the fourth control valve 42.

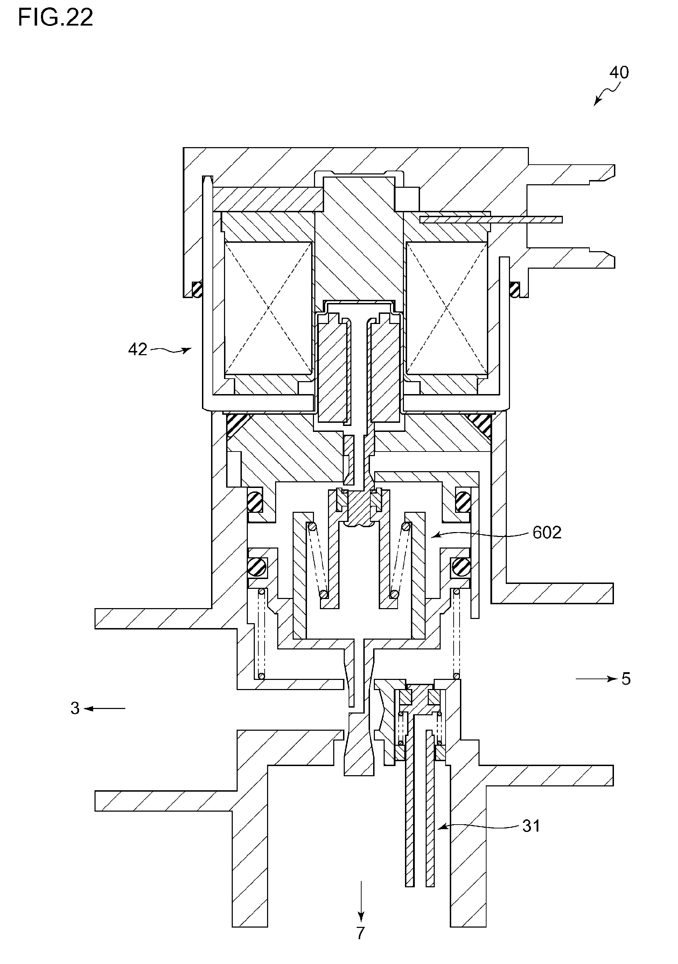

Fig. 22 is a sectional view illustrating a specific structure of the actuator block 40. As stated above, the actuator block 40 includes the fourth control valve 42 and the first differential pressure orifice 31. In the fourth control valve 42, the pilot mechanism and the proportional valve 602 in the electromagnetic valve 600 are applied as the three-way proportional control valve. As illustrated, the fluid that has flowed in from the indoor condenser 3 is distributed, in accordance with the position of the proportional valve 602, into the outdoor heat exchanger 5 and the evaporator 7 at a desired ratio of flow rate.

### Reference Numerals

- 100: Electromagnetic Valve
- 101: Valve Unit
- 102: Solenoid
- 103: Body
- 105: Main Valve
- 106: Pilot Valve
- 116: High-Pressure Chamber
- 118: Low Pressure Chamber
- 120: Main Valve Hole
- 124: Main Valve Element
- 139: Orifice
- 140: Back-Pressure Chamber
- 142: Leg
- 146: Sub-Valve Hole
- 150: Pilot Valve Element
- 156: Spring
- 171: First Plunger
- 172: Second Plunger
- 500: Electromagnetic Valve
- 501: Valve Unit
- 502: Solenoid
- 503: Body
- 505: Main Valve
- 506: Pilot Valve
- 516: High-Pressure Chamber
- 518: Low-Pressure Chamber
- 520: Main Valve Hole
- 524: Main Valve Element
- 539: Orifice
- 540: Back Pressure Chamber
- 546: Sub-valve Hole
- 550: Pilot Valve Element
- 556: Spring
- 571: Plunger
- 572: Fixed Iron Core

## Claims

1. A pilot-operated electromagnetic valve comprising:
a pilot valve including a pilot valve hole formed in one of a body and a main valve of the electromagnetic valve and a pilot valve element arranged to contact and leave the pilot valve hole;
a solenoid configured to operate the pilot valve, including a first iron core that moves in an axial direction integrally with the pilot valve element and a second iron core arranged at a gap from the first iron core opposite to the pilot valve element with respect to the axial direction; and
an elastic member attached to the pilot valve element at an end of the member and attached to the other of the body and the main valve at another end of the member, so that the pilot valve element is stopped at a balanced position by exerting an elastic force on the pilot valve element in a direction opposite to that of an electromagnetic suction force of the solenoid, wherein
by making a deformation range of the elastic member, the deformation occurring due to the elastic force, to be larger than a variable range of the gap between the first iron core and the second iron core, and also by associating an amount of deformation of the elastic member with an amount of movement of the main valve, a stroke of the main valve is larger than a relative movement stroke between the first iron core and the second iron core.

2. The pilot-operated electromagnetic valve according to claim 1, wherein
the main valve has a main valve element configured to open or close a main passage that directly connects an upstream passage to a downstream passage by making the main valve element leave or contact a main valve hole that connects both the passages together, and the main valve element is provided so as to partition the upstream passage, the downstream passage, and a back-pressure chamber, and wherein the pilot valve element opens or closes a sub-passage that connects the upstream passage to the downstream passage via the back-pressure chamber by making the pilot valve element leave or contact the pilot valve hole, and the sub-passage includes a leak passage that connects the back-pressure chamber to the main passage, and wherein
the pilot valve hole has a channel sectional area larger than that of the leak passage.

3. The pilot-operated electromagnetic valve according to claim 2, wherein
the pilot valve hole is formed in the main valve element, and wherein the main valve element has a leg extending in the axial direction toward the solenoid, and the main valve is supported by the leg so as to move in the axial direction integrally with the second iron core, and wherein the elastic member is housed in the back-pressure chamber with one end of the elastic member being attached to the pilot valve element and the other end being attached to the body, and wherein
the main valve element is made to follow, by a change in the pressure in the back-pressure chamber, the pilot valve to reach a stop position where the electromagnetic suction force of the solenoid and the elastic force are balanced with each other.

4. The pilot-operated electromagnetic valve according to claim 2, wherein
the pilot valve hole is formed in the body, and wherein
the elastic member is housed in the back-pressure chamber with one end of the elastic member being attached to the pilot valve element and the other end being attached to the main valve element in order to generate the elastic force to be balanced with the electromagnetic suction force of the solenoid by a movement of the main valve element, the movement occurring due to a change in the pressure in the back-pressure chamber.

5. A pilot-operated electromagnetic valve comprising:
a solenoid including a first iron core and a second iron core arranged in an axial direction so as to be movable relatively with each other, the solenoid configured to generate an electromagnetic suction force for moving the first iron core integrally with a pilot valve; and
a stroke amplifying mechanism including an elastic member for stopping the pilot valve at a balanced position by exerting an elastic force on the pilot valve in a direction opposite to that of the electromagnetic suction force, the elastic member being deformable by an amount larger than an amount of reduction in a gap between the first iron core and the second iron core, the reduction occurring due to the electromagnetic suction force of the solenoid, the amplifying mechanism configured to amplify a stroke of a main valve by making a stop position of the main valve to be dependent on an amount of elastic deformation of the elastic member.

6. A valve structure comprising:
an intermediate-pressure chamber connecting a high-pressure passage and a low-pressure passage therebetween;
a piston configured to move by an effect of a fluid pressure in the intermediate-pressure chamber;
a valve element provided to open or close a channel between the intermediate-pressure chamber and one of the high-pressure passage and the low-pressure passage;
a solenoid configured to generate an electromagnetic suction force for moving the valve element; and
an elastic member configured to exert an elastic force on the valve element in a direction opposite to that of the electromagnetic suction force of the solenoid, an end of the elastic member attached to the piston and another end of the elastic member attached to the valve element, wherein
the valve element opens and closes the channel by a balance between the elastic force in accordance with an elastic deformation of the elastic member, the deformation associated with a movement of the piston occurring when the fluid pressure works, and the electromagnetic suction force; and a stop of the piston is provided at a position where the elastic deformation is applied to the elastic member to generate the elastic force to be balanced with the electromagnetic suction force.
